# EUROPÄISCHE PATENTSCHRIFT

(11) **EP 4 199 550 B1**
(45) Veröffentlichungstag und Bekanntmachung des Hinweises auf die Patenterteilung: **28.08.2024**
(21) Anmeldenummer: 21214622.9
(22) Anmeldetag: 15.12.2021
(51) Int. Cl.: H04W 4/06, H04W 12/06, H04L 9/40, H04W 4/70, H04L 9/32, H04W 12/033

(54) **VERFAHREN ZUM ÜBERMITTELN EINES NACHRICHTENINHALTS IN VERSCHLÜSSELTER FORM ZWISCHEN EINEM ERSTEN KOMMUNIKATIONSTEILNEHMER UND WENIGSTENS EINEM ZWEITEN KOMMUNIKATIONSTEILNEHMER, SYSTEM, TELEKOMMUNIKATIONSNETZ, COMPUTERPROGRAMM UND COMPUTERLESBARES MEDIUM**
METHOD FOR TRANSMITTING A MESSAGE CONTENT IN ENCRYPTED FORM BETWEEN A FIRST COMMUNICATION USER AND AT LEAST ONE SECOND COMMUNICATION USER, SYSTEM, TELECOMMUNICATION NETWORK, COMPUTER PROGRAM AND COMPUTER READABLE MEDIUM
PROCÉDÉ DE TRANSMISSION D'UN CONTENU DE MESSAGE SOUS FORME CHIFFRÉE ENTRE UN PREMIER PARTICIPANT À LA COMMUNICATION ET AU MOINS UN DEUXIÈME PARTICIPANT À LA COMMUNICATION, SYSTÈME, RÉSEAU DE TÉLÉCOMMUNICATIONS, PROGRAMME INFORMATIQUE ET SUPPORT LISIBLE PAR ORDINATEUR

(43) Veröffentlichungstag der Anmeldung: 21.06.2023
(73) Patentinhaber: Deutsche Telekom AG, 53113 Bonn (DE)
(72) Erfinder: SUDHOLT, Frank, 53604 Bad Honnef (DE); SCHMITT, Florian-Leon, 53227 Bonn (DE)
(74) Vertreter: Schwöbel, Thilo K.

(56) Entgegenhaltungen:
- US-A1- 2020 351 616
- US-A1- 2021 211 870
- US-A1- 2021 218 753
- US-A1- 2021 321 227

## Beschreibung

### Stand der Technik

Die Erfindung betrifft ein Verfahren zum Übermitteln eines Nachrichteninhalts in verschlüsselter Form zwischen einem ersten Kommunikationsteilnehmer und wenigstens einem zweiten Kommunikationsteilnehmer, wobei die Übermittlung des Nachrichteninhalts mittels Broadcast-Nachrichten einer PC5-Sidelink Funktionalität, insbesondere unter Nutzung der Mode-4-Funktionalität, erfolgt,
wobei sowohl der erste Kommunikationsteilnehmer als auch der wenigstens eine zweite Kommunikationsteilnehmer ein Client-Computergerät zur Ausführung von Software-Code einer Software-Client-Anwendung ist, wobei die Software-Client-Anwendung sowohl des ersten Kommunikationsteilnehmers als auch die Software-Client-Anwendung des wenigstens einen zweiten Kommunikationsteilnehmers ausgebildet ist, mit einer Anwenduns-Server-Entität insbesondere über ein Telekommunikationsnetz zu kommunizieren. US 2021/211870 A1 offenbart ein Verfahren für V2X-Kommunikation mittels PC5-sidelink Broadcast-Nachrichten.

Die Erfindung betrifft des Weiteren ein System zum Übermitteln eines Nachrichteninhalts in verschlüsselter Form zwischen einem ersten Kommunikationsteilnehmer und wenigstens einem zweiten Kommunikationsteilnehmer, wobei die Übermittlung des Nachrichteninhalts mittels Broadcast-Nachrichten einer PC5-Sidelink Funktionalität, insbesondere unter Nutzung der Mode-4-Funktionalität, erfolgt,
wobei sowohl der erste Kommunikationsteilnehmer als auch der wenigstens eine zweite Kommunikationsteilnehmer ein Client-Computergerät zur Ausführung von Software-Code einer Software-Client-Anwendung ist, wobei die Software-Client-Anwendung sowohl des ersten Kommunikationsteilnehmers als auch die Software-Client-Anwendung des wenigstens einen zweiten Kommunikationsteilnehmers ausgebildet ist, mit einer Anwendungs-Server-Entität, insbesondere über ein Telekommunikationsnetz, zu kommunizieren.

Die Erfindung betrifft ferner ein Telekommunikationsnetz, insbesondere umfassend eine Anwendungs-Server-Entität, zur Verwendung in einem erfindungsgemäßen System oder in einem erfindungsgemäßen Verfahren.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Um die Verkehrssicherheit zukünftig weiter zu erhöhen, ist es neben der Nutzung von Sensoren wie elektrooptischen Sensoren, wie sie zunehmend in Fahrzeugen verbaut werden, auch die Möglichkeit des Nachrichtenaustausches zwischen Teilnehmern eines Verkehrssystems (ITS) notwendig. Dies gilt für Fahrzeuge untereinander (V2V-Kommunikation), aber auch zwischen Fahrzeugen und Teilen der Infrastruktur (V2I, Vehicle-to-infrastructure), dem Kommunikation-Netzwerk (V2N, Vehicle-to-network) sowie anderen Verkehrsteilnehmen (V2P. Vehicle-to-pedestian). Neben der Kommunikation zwischen Fahrzeugen (Vehicle-to-Vehicle (V2V)) kommt somit auch der Kommunikation zwischen Fahrzeugen und anderen Teilnehmern (V2X) im Verkehrssystem eine immer größere Bedeutung zu, d.h. der Austausch von V2X-Nachrichten zwischen Verkehrsteilnehmen in einem begrenzten Gebiet, etwa unter Nutzung von standardisierten V2X-Technologien basierend auf Wi-Fi (IEEE 802.11p) bzw. zellularer Kommunikation (Cellular V2X (C-V2X)), wobei nur die C-V2X-Technologien die Möglichkeit bieten, neben der direkten Kommunikation (V2V unmanaged mode Mode 4 (PC5 Sidelink)), auch über bzw. mit V2X-Applikationen im Netzwerk bzw. Internet zu kommunizieren. Dabei steht im Vordergrund, dass insbesondere einzelne Fahrzeuge / Verkehrsteilnehmer andere Verkehrsteilnehmer über relevante Informationen für das Gebiet benachrichtigen.
Dabei ist für viele Anwendungsfälle einer verkehrsbezogenen bzw. sicherheitsrelevanten Kommunikation eine direkte Kommunikation per Multicast oder Broadcast Nachrichten (sogenannte sidelink-Kommunikation) notwendig, wobei die Authentizität und Autorisierung der Nachrichten sowie die Anonymität bzw. der Datenschutz der Fahrzeuge bzw. Teilnehmer im Vordergrund steht. Solche Anwendungsfälle betreffen beispielsweise die Verkehrssicherheit, bei denen eine Nachricht (in der Regel Broadcast-Nachrichten) grundsätzlich von allen Verkehrsteilnehmern empfangen und gelesen werden darf, d.h. die Vertraulichkeit muss nicht (durch Verschlüsselung) geschützt werden; allerdings muss sichergestellt werden, dass die Integrität der Nachricht und Autorisierung des Senders gewährleistet ist. Dies erfolgt typischerweise durch die Signierung der Nachrichten durch den Sender, was in der Regel dadurch erfolgt, dass eine sogenannte Pseudonym-Zertifikatsautorität (Pseudonym Certificate Authority (PCA)) den Verkehrsteilnehmern kurzfristige, d.h. zeitlich sehr begrenzt gültige, Zertifikate, sog. Pseudonymous Authorization Certificates, ausstellt, wodurch die Notwendigkeit entfällt, Zertifikate zurückzurufen. Hierbei stehen bei solchen betrachteten Anwendungsfällen insbesondere die folgenden Anforderungen im Vordergrund: Autorisierung der Nachrichten, Anonymität der Sender (durch Pseudonymisierung), Netzabdeckung, Latenz, etc.
Darüber hinaus gibt es jedoch auch Anwendungsfälle, bei denen eine gegenseitig authentisierte und verschlüsselte Kommunikation von zwei Fahrzeugen (oder Teilnehmern) bzw. einer definierten Gruppe von Fahrzeugen (oder Teilnehmern) wichtig ist. Für solche Anwendungsfälle, für welche insbesondere auch die Funktionen der gegenseitigen Authentisierung und Verschlüsselung (Vertraulichkeit) wichtig sind, werden solche Funktionen im Rahmen der bisherigen Standardisierungsbemühungen (3GPP und ETSI) nicht auf Netzwerkebene spezifiziert, sondern auf die Applikationsebene delegiert, was auch mit Blick auf ansonsten erforderliche Lösungen bezüglich Roaming (sowohl technisch als auch vertraglich) vorteilhaft ist; insofern sind standardisierte Lösungen für solche Anwendungsfälle nicht nutzbar. Ferner ist es auch so, dass sich die zentrale V2X-Anforderung der Anonymität der Sender (bei verkehrsbezogenen und sicherheitskritischen Anwendungsfällen) einerseits und die gegenseitige Authentisierung (bei Anwendungsfällen von gegenseitig authentisierter und verschlüsselter Kommunikation) andererseits, die eine Identifizierung des Senders (und auch des Empfängers) voraussetzt, widersprechen.

### Offenbarung der Erfindung

Der Erfindung liegt die Aufgabe zugrunde, ein Verfahren zum Übermitteln eines Nachrichteninhalts in verschlüsselter Form zwischen einem ersten Kommunikationsteilnehmer und wenigstens einem zweiten Kommunikationsteilnehmer bereitzustellen, wobei die Übermittlung des Nachrichteninhalts mittels Broadcast-Nachrichten einer PC5-Sidelink Funktionalität, insbesondere unter Nutzung der Mode-4-Funktionalität, erfolgt und wobei sowohl der erste Kommunikationsteilnehmer als auch der wenigstens eine zweite Kommunikationsteilnehmer ein Client-Computergerät zur Ausführung von Software-Code einer Software-Client-Anwendung ist, wobei die Software-Client-Anwendung sowohl des ersten Kommunikationsteilnehmers als auch die Software-Client-Anwendung des wenigstens einen zweiten Kommunikationsteilnehmers ausgebildet ist, mit einer Anwendungs-Server-Entität, insbesondere über ein Telekommunikationsnetz, zu kommunizieren. Die Erfindung wird in den beigefügten Ansprüchen offenbart.

Die Aufgabe wird erfindungsgemäß gelöst durch ein Verfahren zum Übermitteln eines Nachrichteninhalts in verschlüsselter Form zwischen einem ersten Kommunikationsteilnehmer und wenigstens einem zweiten Kommunikationsteilnehmer, wobei die Übermittlung des Nachrichteninhalts mittels Broadcast-Nachrichten einer PC5-Sidelink Funktionalität, insbesondere unter Nutzung der Mode-4-Funktionalität, erfolgt, wobei sowohl der erste Kommunikationsteilnehmer als auch der wenigstens eine zweite Kommunikationsteilnehmer ein Client-Computergerät zur Ausführung von Software-Code einer Software-Client-Anwendung ist, wobei die Software-Client-Anwendung sowohl des ersten Kommunikationsteilnehmers als auch die Software-Client-Anwendung des wenigstens einen zweiten Kommunikationsteilnehmers ausgebildet ist, mit einer Anwendungs-Server-Entität, insbesondere über ein Telekommunikationsnetz, zu kommunizieren,
wobei mittels der Software-Client-Anwendungen der Kommunikationsteilnehmer Registrierungsdaten von der Anwendungs-Server-Entität zu den Kommunikationsteilnehmern und/oder von den Kommunikationsteilnehmern zur Anwendungs-Server-Entität gesendet werden, sodass den Kommunikationsteilnehmern wenigstens eine Dienste-Kennungsinformation vorliegt,
wobei das Verfahren die nachfolgenden Verfahrensschritte aufweist:
   -- in einem ersten Schritt wird zum Start einer durch den ersten Kommunikationsteilnehmer initiierten Nachrichten-Session von Broadcast-Nachrichten eine Sessions-Kennungsinformation durch den ersten Kommunikationsteilnehmer generiert
   -- in einem dem ersten Schritt nachfolgenden zweiten Schritt sendet der erste Kommunikationsteilnehmer eine Anfrage-Broadcast-Nachricht zur Teilnahme des zweiten Kommunikationsteilnehmers an der Nachrichten-Session und empfängt der erste Kommunikationsteilnehmer eine Antwort-Nachricht zur Teilnahme des zweiten Kommunikationsteilnehmers an der Nachrichten-Session, wobei die Anfrage-Broadcast-Nachricht und/oder die Antwort-Nachricht unter Verwendung von wenigstens einem Teil der Registrierungsdaten gesichert, insbesondere signiert, ist,
   -- in einem dem zweiten Schritt nachfolgenden dritten Schritt erfolgt eine Übertragung von Broadcast-Nachrichten zwischen dem ersten und zweiten Kommunikationsteilnehmer zum Übermitteln des Nachrichteninhalts in gesicherter Form.

Es ist dadurch gemäß der vorliegenden Erfindung in vorteilhafter Weise möglich, dass in vergleichsweise einfacher Art und Weise ein Diensteanbieter einen Service bzw. Kommunikationsdienst über eine V2X-Applikation für registrierte Fahrzeuge bzw. Kommunikationsteilnehmer anzubieten in der Lage ist, wobei sich die Fahrzeuge (bzw. Kommunikationsteilnehmer) in gegenseitiger Reichweite für V2X-Kommunikation befinden und wobei die Kommunikation bezüglich des Service bzw. Kommunikationsdienstes authentisiert (basierend insbesondere auf einer V2X-Applikation ID) und verschlüsselt erfolgt. Insbesondere ist es hierbei möglich, dass ein Fahrzeug (bzw. ein Kommunikationsteilnehmer), welches kommunizieren möchte, eine Kommunikationssession bzw. Nachrichten-Session initiiert. Alle anderen Fahrzeuge (bzw. Kommunikationsteilnehmer), die sich bei dem Service ebenfalls registriert haben, sich in Reichweite befinden und an der Kommunikationssession (bzw. Nachrichten-Session) teilnehmen möchten, können sich dann bei der V2X-Applikation zur Teilnahme anmelden. Die V2X-Applikation stellt beispielsweise einen Sessionkey (bzw. Session-Schlüsselinformation) für die Verschlüsselung der Kommunikation und bei Bedarf auch weitere Informationen über die einzelnen Fahrzeuge bereit. Anschließend können die Fahrzeuge direkt über die PC5-Schnittstelle gesichert kommunizieren.

Gemäß herkömmlicherweise bekannter Verfahren und Hauptanwendungsfällen bei der standardisierten V2X-Kommunikation stehen die Authentizität und Autorisierung der Nachrichten sowie die Anonymität bzw. der Datenschutz der Verkehrsteilnehmer (VT) im Vordergrund. Dementsprechend sind auf Netzwerkebene lediglich Sicherheitsfunktionen für diese Sicherheitsanforderungen standardisiert. Für weitere Sicherheitsfunktionen, insbesondere gegenseitige Authentisierung und Verschlüsselung wird auf die Applikationsebene verwiesen; ein weiterer Grund hierfür ist, dass die gesetzlichen und regulatorischen Anforderungen an diese Sicherheitsfunktionen regional bzw. länderspezifisch sehr unterschiedlich sind.
Entsprechend ist es für Anwendungsfälle bzw. Anwendungen (nachfolgend auch als V2X-Anwendung bezeichnet), bei denen auch eine gegenseitig authentisierte und verschlüsselte Kommunikation von zwei bzw. einer definierten Gruppe von Verkehrsteilnehmern bzw. Kommunikationsteilnehmern wichtig ist, notwendig entsprechende Sicherheitslösungen/-funktionalitäten auf Applikationsebene zu implementieren. Die hierfür vorhandenen standardbasierenden Lösungen und Ansätze, wie z.B. die Nutzung von V2X-Applikationen (V2X-applications), sind jedoch tief in das Mobilfunknetzwerk integriert und sind aufwendig zu implementieren. Für kleinere und innovative V2X Use Cases und V2X-Anwendungen sind solche Lösungen nicht realisierbar. Somit ist es kleinen, innovativen Dienstanbietern nur sehr aufwendig möglich bis unmöglich, Anwendungen zu entwickeln und implementieren, bei denen die User/Kommunikationsteilnehmer authentisiert und verschlüsselt über V2X-Kommunikation miteinander kommunizieren. Beispielsweise könnte dies eine Anwendung für das sichere und schnelle Kommunizieren einer Community von Verkehrsteilnehmer (beispielsweise die Fans gewisser Automarken, etc.), die sich innerhalb einer gewissen Umgebung (Reichweite V2X-Kommunikation) aufhält, sein. Ein weiteres Anwendungsbeispiel kann sein, dass ein Diensteanbieter, wie z.B. ein Automobilhersteller, seinen Kunden die Möglichkeit geben möchte, lokale Nachrichten gesichert austauschen zu können.

Gemäß der vorliegenden Erfindung ist es beispielsweise vorteilhaft möglich, dass das Schlüsselmanagement für die Authentisierung und Verschlüsselung für (V2X-) Anwendungen nicht über die (komplexe Architektur der) Anwendungsebene der V2X-Kommunikation, d.h. insbesondere die (standardisierten) V2X-Applications (d.h. die in den V2X Standards spezifizierte Komponente V2X-Application als Teil der V2X-Architektur), zu implementieren, sondern über Mobilfunkkommunikation gemäß der verfügbaren Funkzugangstechnologie wie beispielsweise 2G, 3G, 4G bzw. 5G. Dies bedeutet, dass beispielsweise das Schlüsselmanagement für die Authentisierung der V2X-Kommunikationsteilnehmer und für die Verschlüsselung der V2X-Kommunikation über eine Mobilfunk-App (vgl. Apps für mobile Betriebssysteme wie Android oder iOS), im folgenden auch als V2X-Anwendung bezeichnet, realisiert wird. So wird es Diensteanbietern erleichtert, mit der Kombination aus (standardisierter) V2X-Kommunikation, (standardisiertem) Mobilfunk und etablierten Sicherheitsmechanismen, in ihren V2X-Anwendungen gegenseitige Authentisierung der VT und Verschlüsselung zu implementieren.

Erfindungsgemäß ist somit ein Verfahren vorgesehen, bei dem ein Nachrichteninhalt in verschlüsselter Form zwischen einem ersten Kommunikationsteilnehmer und wenigstens einem zweiten Kommunikationsteilnehmer mittels Broadcast-Nachrichten einer PC5-Sidelink Funktionalität übertragen wird, insbesondere unter Nutzung der Mode-4-Funktionalität. Sowohl der erste Kommunikationsteilnehmer als auch der wenigstens eine zweite Kommunikationsteilnehmer ist ein Client-Computergerät zur Ausführung von Software-Code einer Software-Client-Anwendung, wobei die Software-Client-Anwendung sowohl des ersten Kommunikationsteilnehmers als auch die Software-Client-Anwendung des wenigstens einen zweiten Kommunikationsteilnehmers ausgebildet ist, mit einer Anwendungs-Server-Entität (V2X-Anwendung), insbesondere über ein Telekommunikationsnetz, zu kommunizieren. Mittels der Software-Client-Anwendungen der Kommunikationsteilnehmer werden erfindungsgemäß Registrierungsdaten von der Anwendungs-Server-Entität zu den Kommunikationsteilnehmern und/oder von den Kommunikationsteilnehmern zur Anwendungs-Server-Entität derart gesendet, dass den Kommunikationsteilnehmern wenigstens eine Dienste-Kennungsinformation vorliegt. Erfindungsgemäß wird in einem ersten Schritt zum Start einer durch den ersten Kommunikationsteilnehmer initiierten Nachrichten-Session von Broadcast-Nachrichten eine Sessions-Kennungsinformation durch den ersten Kommunikationsteilnehmer generiert. In einem zweiten Schritt sendet der erste Kommunikationsteilnehmer eine Anfrage-Broadcast-Nachricht zur Teilnahme des zweiten Kommunikationsteilnehmers an der Nachrichten-Session und empfängt der erste Kommunikationsteilnehmer eine Antwort-Nachricht zur Teilnahme des zweiten Kommunikationsteilnehmers an der Nachrichten-Session, wobei die Anfrage-Broadcast-Nachricht und/oder die Antwort-Nachricht unter Verwendung von wenigstens einem Teil der Registrierungsdaten gesichert, insbesondere signiert, ist. In einem dem zweiten Schritt nachfolgenden dritten Schritt erfolgt eine Übertragung von Broadcast-Nachrichten zwischen dem ersten und zweiten Kommunikationsteilnehmer zum Übermitteln des Nachrichteninhalts in gesicherter Form.

Gemäß einer bevorzugten Ausführungsform der vorliegenden Erfindung ist es vorgesehen, dass die Registrierungsdaten neben der Dienste-Kennungsinformation Zertifikatsinformationen einer Öffentliche-Schlüssel-Infrastruktur und/oder einer Zertifikats-Autorität umfassen, wobei die Registrierungsdaten insbesondere für jeden Kommunikationsteilnehmer eine zugeordnete Zertifikatsinformation und eine Private-Schlüssel-Information umfassen.

Hierdurch ist es erfindungsgemäß in vorteilhafter Weise möglich, dass die Kommunikationsteilnehmer verschlüsselt miteinander zu kommunizieren in der Lage sind.

Gemäß einer weiteren Ausführungsform der vorliegenden Erfindung ist es vorgesehen, dass die Anwendungs-Server-Entität in einem dem ersten Schritt vorhergehenden vierten Schritt eine Sessions-Schlüsselinformation generiert und an den ersten Kommunikationsteilnehmer sendet.

Hierdurch ist es erfindungsgemäß in vorteilhafter Weise möglich, dass die Anwendungs-Server-Entität bei der Erstellung der Nachrichten-Session bzw. der Durchführung der Nachrichten-Session mit den Kommunikationsteilnehmer involviert wird.

Gemäß einer weiteren Ausführungsform der vorliegenden Erfindung ist es vorgesehen, dass der erste Kommunikationsteilnehmer die Antwort-Nachricht zur Teilnahme des zweiten Kommunikationsteilnehmers an der Nachrichten-Session als eine von der Anwendungs-Server-Entität gesendete Nachricht empfängt, insbesondere als verschlüsselte und signierte Nachricht.

Hierdurch ist es erfindungsgemäß in vorteilhafter Weise möglich, dass die Anwendungs-Server-Entität bei der Erstellung bzw. der Initiierung der Nachrichten-Session bzw. des Nachrichtenaustauschs zwischen den Kommunikationsteilnehmer involviert ist.

Gemäß einer weiteren Ausführungsform der vorliegenden Erfindung ist es vorgesehen, dass die Antwort-Nachricht zur Teilnahme des zweiten Kommunikationsteilnehmers an der Nachrichten-Session eine eine Transportverschlüsselung nutzende und auf der Basis der Registrierungsdaten verschlüsselte Antwort-Nachricht ist.

Hierdurch ist es erfindungsgemäß in vorteilhafter Weise möglich, dass auf eine Öffentliche Schlüssel Infrastruktur verzichtet werden kann und dennoch eine gesicherte Kommunikation möglich ist.

Gemäß einer weiteren Ausführungsform der vorliegenden Erfindung ist es vorgesehen, dass die im dritten Schritt übertragenen Broadcast-Nachrichten zwischen dem ersten und zweiten Kommunikationsteilnehmer verschlüsselt sind,
wobei insbesondere zur Verschlüsselung die Sessions-Schlüsselinformation oder die Zertifikatsinformation des zweiten Kommunikationsteilnehmers verwendet wird,
wobei insbesondere die im dritten Schritt übertragenen Broadcast-Nachrichten zwischen dem ersten und zweiten Kommunikationsteilnehmer nicht nur verschlüsselt sondern auch signiert sind, wobei zur Signierung die Private-Schlüssel-Information verwendet wird.

Hierbei ist es erfindungsgemäß vorteilhaft möglich, dass unterschiedliche Absicherungsniveaus bzw. Sicherheitsniveaus erfindungsgemäß realisiert werden können.

Des Weiteren wird die Aufgabe gelöst durch ein System zum Übermitteln eines Nachrichteninhalts in verschlüsselter Form zwischen einem ersten Kommunikationsteilnehmer und wenigstens einem zweiten Kommunikationsteilnehmer, wobei die Übermittlung des Nachrichteninhalts mittels Broadcast-Nachrichten einer PC5-Sidelink Funktionalität, insbesondere unter Nutzung der Mode-4-Funktionalität, erfolgt, wobei sowohl der erste Kommunikationsteilnehmer als auch der wenigstens eine zweite Kommunikationsteilnehmer ein Client-Computergerät zur Ausführung von Software-Code einer Software-Client-Anwendung ist, wobei die Software-Client-Anwendung sowohl des ersten Kommunikationsteilnehmers als auch die Software-Client-Anwendung des wenigstens einen zweiten Kommunikationsteilnehmers ausgebildet ist, mit einer Anwendungs-Server-Entität, insbesondere über ein Telekommunikationsnetz, zu kommunizieren,
wobei mittels der Software-Client-Anwendungen der Kommunikationsteilnehmern Registrierungsdaten von der Anwendungs-Server-Entität zu den Kommunikationsteilnehmern und/oder von den Kommunikationsteilnehmern zur Anwendungs-Server-Entität gesendet werden, sodass den Kommunikationsteilnehmern wenigstens eine Dienste-Kennungsinformation vorliegt,
wobei das System derart konfiguriert ist, dass:
   -- zum Start einer durch den ersten Kommunikationsteilnehmer initiierten Nachrichten-Session von Broadcast-Nachrichten wird eine Sessions-Kennungsinformation durch den ersten Kommunikationsteilnehmer generiert
   -- der erste Kommunikationsteilnehmer sendet eine Anfrage-Broadcast-Nachricht zur Teilnahme des zweiten Kommunikationsteilnehmers an der Nachrichten-Session und empfängt der erste Kommunikationsteilnehmer eine Antwort-Nachricht zur Teilnahme des zweiten Kommunikationsteilnehmers an der Nachrichten-Session, wobei die Anfrage-Broadcast-Nachricht und/oder die Antwort-Nachricht unter Verwendung von wenigstens einem Teil der Registrierungsdaten gesichert, insbesondere signiert, ist,
   -- eine Übertragung von Broadcast-Nachrichten zwischen dem ersten und zweiten Kommunikationsteilnehmer zum Übermitteln des Nachrichteninhalts in gesicherter Form erfolgt.

Es ist dadurch gemäß der vorliegenden Erfindung in vorteilhafter Weise möglich, ein zum erfindungsgemäßen Verfahren korrespondierendes erfindungsgemäßes System bereitzustellen.

Die Aufgabe wird ferner gelöst durch ein Telekommunikationsnetz, insbesondere umfassend eine Anwendungs-Server-Entität, zur Verwendung in einem erfindungsgemäßen System oder einem erfindungsgemäßen Verfahren.

Es ist dadurch gemäß der vorliegenden Erfindung in vorteilhafter Weise möglich, eine zum erfindungsgemäßen Verfahren korrespondierendes erfindungsgemäßes Telekommunikationsnetz umfassend insbesondere die Anwendungs-Server-Entität bereitzustellen.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einer programmierbaren Einrichtung der Kommunikationsteilnehmer und/oder eines Netzknotens des Telekommunikationsnetzes ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einer programmierbaren Einrichtung des Fahrzeugs und/oder eines Netzknotens des Telekommunikationsnetzes, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Kommunikationsdiagramm einer ersten Variante des erfindungsgemäßen Verfahrens zum Übermitteln eines Nachrichteninhalts in verschlüsselter Form zwischen einem ersten Kommunikationsteilnehmer und wenigstens einem zweiten Kommunikationsteilnehmer.
- **Figur 2**: zeigt schematisch ein Kommunikationsdiagramm einer zweiten Variante des erfindungsgemäßen Verfahrens zum Übermitteln eines Nachrichteninhalts in verschlüsselter Form zwischen einem ersten Kommunikationsteilnehmer und wenigstens einem zweiten Kommunikationsteilnehmer.
- **Figur 3**: zeigt schematisch ein Kommunikationsdiagramm einer dritten Variante des erfindungsgemäßen Verfahrens zum Übermitteln eines Nachrichteninhalts in verschlüsselter Form zwischen einem ersten Kommunikationsteilnehmer und wenigstens einem zweiten Kommunikationsteilnehmer.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

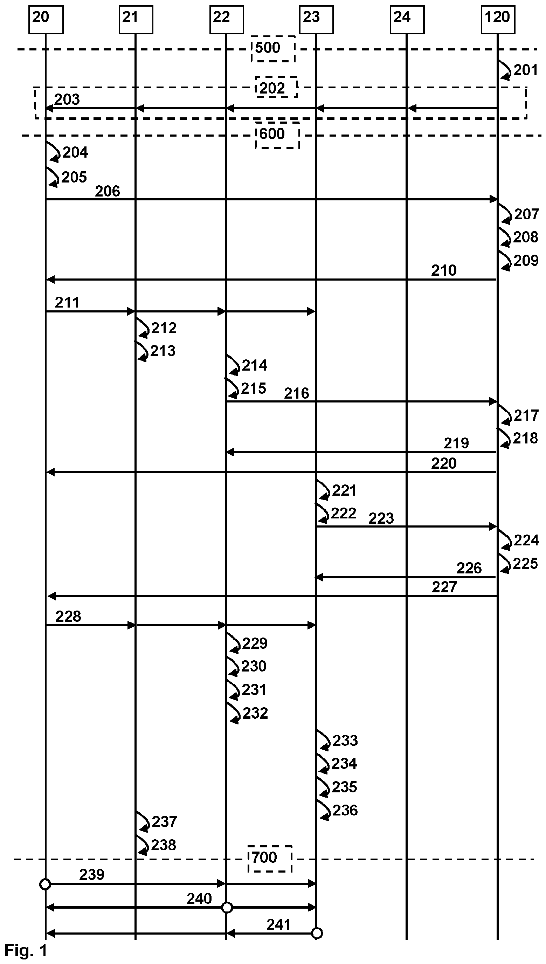

In Figur 1 ist schematisch ein Kommunikationsdiagramm einer ersten Variante des erfindungsgemäßen Verfahrens zum Übermitteln eines Nachrichteninhalts in verschlüsselter Form zwischen einem ersten Kommunikationsteilnehmer 20 und wenigstens einem zweiten Kommunikationsteilnehmer 21 dargestellt.

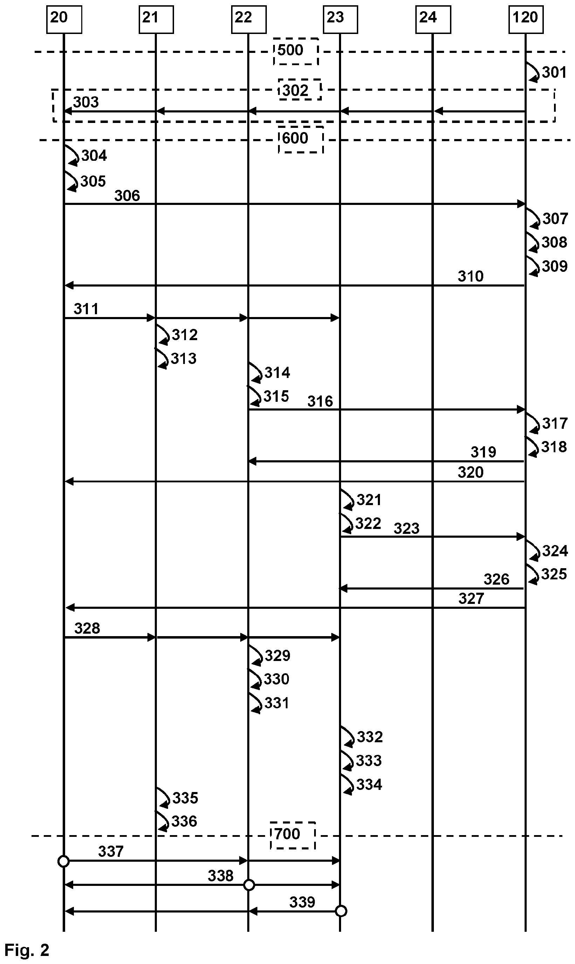

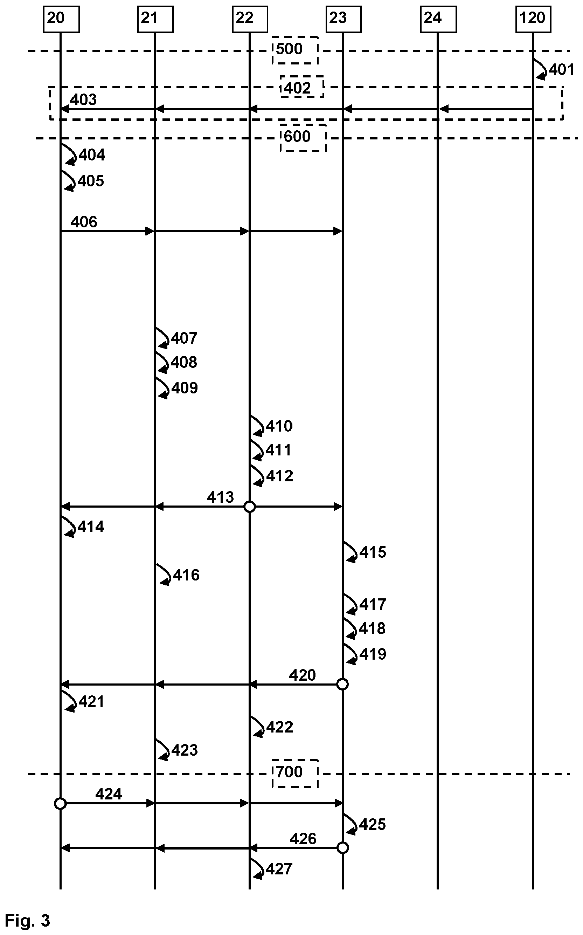

In Figur 2 ist ein Kommunikationsdiagramm einer zweiten Variante eines solchen erfindungsgemäßen Verfahrens dargestellt und in Figur 3 ist ein Kommunikationsdiagramm einer dritten Variante eines solchen erfindungsgemäßen Verfahrens dargestellt.
Die Figuren zeigen jeweils ein Kommunikationsdiagramm zwischen dem ersten Kommunikationsteilnehmer 20 (bzw. ersten Fahrzeug 20), dem zweiten Kommunikationsteilnehmer 21 (bzw. zweiten Fahrzeug 21), einem dritten Kommunikationsteilnehmer 22 (bzw. dritten Fahrzeug 22), einem vierten Kommunikationsteilnehmer 23 (bzw. vierten Fahrzeug 23) und einem fünften Kommunikationsteilnehmer 24 (bzw. fünften Fahrzeug 24). Bei diesen Kommunikationsteilnehmern 20, 21, 22, 23, 24 handelt es sich insbesondere um Verkehrsteilnehmer, insbesondere um Fahrzeuge bzw. um Telekommunikationsendgeräte, welche typischerweise in Fahrzeugen benutzt werden oder aber in Fahrzeugen entweder eingebaut sind oder zumindest teilweise in Fahrzeugen genutzt werden. Die Kommunikationsteilnehmer 20, 21, 22, 23 bzw. die Fahrzeuge 20, 21, 22, 23 werden hierbei als in einer räumlichen Umgebung (bzw. in geographischer Nähe) derart zueinander angenommen, dass Nachrichten, insbesondere Broadcast-Nachrichten, mittels PC5-Sidelink-Funktionalität (insbesondere unter Nutzung der Mode-4-Funktionalität) von einem der Kommunikationsteilnehmer zu wenigstens einem weiteren, bevorzugt jedoch zu mehreren weiteren Kommunikationsteilnehmern erfolgreich übertragen werden können bzw. übertragbar sind (Der fünfte Kommunikationsteilnehmer 24 wird hierbei als räumlich zu weit entfernt angenommen, d.h. Broadcast-Nachrichten werden nicht mehr (sicher) empfangen).
Ferner umfassen die in den Figuren dargestellten Kommunikationsdiagramme jeweils eine Anwendungs-Server-Entität 120, welche zur Kommunikation mit den Kommunikationsteilnehmern 20, 21, 22, 23, 24 vorgesehen ist bzw. umgekehrt sind die Kommunikationsteilnehmer 20, 21, 22, 23, 24 zur Kommunikation mit der Anwendungs-Server-Entität 120 vorgesehen.
Die Kommunikation bzw. der Datenaustausch zwischen der Anwendungs-Server-Entität 120 und den Kommunikationsteilnehmern 20, 21, 22, 23, 24 bzw. jedem einzelnen der Kommunikationsteilnehmer 20, 21, 22, 23, 24 erfolgt hierbei gemäß einem Mobilfunk-Kommunikationsprotokoll bzw. gemäß einem Mobilfunkstandard, etwa einem Mobilfunkstandard der dritten, vierten oder fünften Generation (3G, 4G, 5G, etc.), d.h. unter Nutzung entsprechender in dem Gebiet oder in der Umgebung des geographischen Gebiets der Kommunikationsteilnehmer 20, 21, 22, 23, 24 befindlicher Basisstationseinrichtungen bzw. Mobilfunk-Zugangsnetzwerkeinrichtungen. In den Figuren ist lediglich das Bezugszeichen 120 der Anwendungs-Server-Entität angegeben, jedoch soll hierunter ebenfalls - beispielsweise - eine Basisstation eines Mobilfunk-Zugangsnetzes verstanden werden.

Generell gliedert sich die Kommunikation bzw. das Kommunikationsdiagramm des erfindungsgemäßen Verfahrens (gemäß sämtlicher Varianten desselben) im Wesentlichen in die verschiedenen Abschnitte 500, 600 und 700. Im ersten Abschnitt 500 werden hierbei (gemäß sämtlicher Varianten des erfindungsgemäßen Verfahrens) die Voraussetzungen für die erfindungsgemäße Übermittlung eines Nachrichteninhalts in verschlüsselter Form geschaffen, insbesondere die Bereitstellung, durch die Anwendungs-Server-Entität 120 (und mittels der Software-Client-Anwendungen der Kommunikationsteilnehmer 20, 21, 22, 23, 24), von Registrierungsdaten zu den Kommunikationsteilnehmern 20, 21, 22, 23, 24 und/oder von den Kommunikationsteilnehmern 20, 21, 22, 23, 24 zur Anwendungs-Server-Entität 120; das Mindestergebnis hiervon ist gemäß aller erfindungsgemäßen Varianten, dass den Kommunikationsteilnehmern 20, 21, 22, 23, 24 wenigstens eine Dienste-Kennungsinformation vorliegt. Gemäß sämtlicher Varianten des erfindungsgemäßen Verfahrens dient diese Dienste-Kennungsinformation als Identifikation der V2X-Anwendung; die Dienste-Kennungsinformation sollte eindeutig sein; falls dies nicht der Fall ist, führt dies jedoch nicht zur Reduzierung der Sicherheit des Verfahrens bzw. zur Reduzierung des Schutzniveaus beim Austausch bzw. der Übermittlung der Nachrichteninhalte. Typischerweise findet jedoch auch die Bereitstellung aktueller Zertifikate (insbesondere durch PKI-Komponenten) statt; dies entspricht insbesondere der grundsätzlichen Bereitschaft eines Fahrzeugs bzw. eines Kommunikationsteilnehmers bzw. eines der weiteren Fahrzeuge 21, 22, 23, 24 an der erfindungsgemäßen Übermittlung von Nachrichteninhalten teilzunehmen.
Der zweite Abschnitt 600 umfasst (gemäß sämtlicher Varianten des erfindungsgemäßen Verfahrens) den Trigger zur bzw. der Aufbau der durch den ersten Kommunikationsteilnehmer initiierten Nachrichten-Session von Broadcast-Nachrichten. Der dritte Abschnitt 700 umfasst (gemäß sämtlicher Varianten des erfindungsgemäßen Verfahrens) die operative Durchführung der Übermittlung von Nachrichteninhalten zwischen den Kommunikationsteilnehmern 20, 21, 22, 23, 24.
Erfindungsgemäß umfassen die Kommunikationsteilnehmer 20, 21, 22, 23, 24 jeweils ein Client-Computergerät zur Ausführung von Software-Code einer Software-Client-Anwendung ist. Diese Software-Client-Anwendungen, jeweils der Kommunikationsteilnehmern 20, 21, 22, 23, 24, sind ausgebildet, mit der Anwendungs-Server-Entität 120, insbesondere über ein Telekommunikationsnetz 100 bzw. Mobilfunknetz, zu kommunizieren.

Bei den nachfolgend wiedergegebenen Nachrichten (in geschweiften Klammern { } angegeben) bedeutet:
"(...)SIG_<key>", dass eine Signatur über den Klammerinhalt mit dem privaten Schlüssel <key> erfolgt,
"(...)ENC_<cert/key>", dass eine Verschlüsselung des Klammerinhalts mit dem symmetrischen Schlüssel <key> bzw. dem öffentlichen Schlüssel aus dem Zertifikat <cert> erfolgt.

Nachfolgend wird anhand der Figur 1 und einer Reihe verschiedener Prozessschritte die erste Variante des erfindungsgemäßen Verfahrens im Detail beschrieben:
In einem ersten Prozessschritt 201 erfolgt die Implementierung der public key infrastructure-Komponenten (öffentliche Schlüssel Infrastruktur-Komponenten) bzw. der Zertifikatsautorität (certificate authority, CA) durch die Anwendungs-Server-Entität 120 für die Kommunikationsteilnehmer 20, 21, 22, 23, 24 bzw. Verkehrsteilnehmer (VT). Ferner wird eine Dienste-Kennungsinformation (nachfolgend auch als Service-ID bzw. ServID bezeichnet) generiert bzw. definiert. Diese Dienste-Kennungsinformation dient als Identifikation der V2X-Anwendung.
In einem zweiten Prozessschritt 202 findet eine Registrierung der Kommunikationsteilnehmer 20, 21, 22, 23, 24 für die V2X-Anwendung statt. Hierzu werden als Teil des zweiten Prozessschritts 202 in einem dritten Prozessschritt 203 mehrere Nachrichten ausgetauscht, wobei insbesondere die Dienste-Kennungsinformation den möglichen bzw. potentiellen Kommunikationsteilnehmern 20, 21, 22, 23, 24 zugesandt wird. Jeder Kommunikationsteilnehmer 20, 21, 22, 23, 24, welcher die V2X-Anwendung nutzen möchte, muss sich bei der Anwendungs-Server-Entität 120 registrieren. Dies beinhaltet auch die Ausstellung des jeweiligen V2X-Anwendung-Zertifikats für jeden Kommunikationsteilnehmer 20, 21, 22, 23, 24 (nachfolgend auch als VTx-Cert bzw. Zertifikatsinformation für den VTx bezeichnet, basierend auf dem privaten Schlüssel, nachfolgend auch als VTx-PrivK bzw. Private-Schlüssel-Information bezeichnet). Auch erhält jeder Kommunikationsteilnehmer 20, 21, 22, 23, 24 dabei das verwendete Root-Zertifikat der V2X-Anwendung V2XApp-Cert. Der erste Abschnitt 500 ist damit beendet; es beginnt der zweite Abschnitt 600.
In einem vierten Prozessschritt 204 wird eine gesicherte V2X-Kommunikation (bzw. eine Übermittlung von Nachrichteninhalten in verschlüsselter Form) unter Nutzung der V2X-Anwendung gestartet. Im Beispiel der Figur 1 wird davon ausgegangen, dass dies durch den ersten Kommunikationsteilnehmer 20 getriggert wird. Somit generiert in einem fünften Prozessschritt 205 der erste Kommunikationsteilnehmer 20 pseudozufällig eine Sessions-Kennungsinformation (Session-ID, SID). In einem sechsten Prozessschritt 206 sendet der erste Kommunikationsteilnehmer 20 eine Nachricht {((Starte Session, ServID, SID, Info)ENC_V2XApp-Cert, VT1-Cert)SIG_VT1-PrivK}, dass eine Nachrichten-Session gestartet werden soll, an die Anwendungs-Server-Entität 120. Diese Nachricht enthält die Dienste-Kennungsinformation, ServID, sowie die Sessions-Kennungsinformation, SID, sowie ggf. Parameter und Informationen sowie die Identität des ersten Kommunikationsteilnehmers 20 (VT1-Cert). Diese Informationen können zusätzlich mit der Sicherung nach Mobilfunkstandard noch mit dem Root-Zertificat (V2XApp-Cert) verschlüsselt werden bzw. sein. Außerdem wird VT1-Cert mitgesendet und dann die gesamte Nachricht mit VT1-PrivK signiert.
In einem siebenten Prozessschritt 207 prüft die Anwendungs-Server-Entität 120 (bzw. V2X-Anwendung) die Signatur des ersten Kommunikationsteilnehmer 20, insbesondere mittels des V2X-RootCert sowie dem VT1-Cert (d.h. den Zertifikatsinformationen des ersten Kommunikationsteilnehmers 20) und entschlüsselt ggf. die Nachricht mit V2XApp-PrivK, d.h. dem privaten Schlüssel des V2XApp-Zertifikats/Root-Zertifikats. In einem achten Prozessschritt 208 setzt die Anwendungs-Server-Entität 120 (bzw. V2X-Anwendung) eine Nachrichten-Session des Dienstes (d.h. entsprechend der Dienste-Kennungsinformation, ServID) mit der mitgelieferten Sessions-Kennungsinformation, Session-ID (SID), auf. In einem neunten Prozessschritt 209 generiert die V2X-Anwendung einen symmetrischen Schlüssel (Sessions-Schlüsselinformation, Skey) für die Verschlüsslung der Nachrichten für die Nachrichten-Session (bezogen auf die Sessions-Kennungsinformation, SID).
In einem zehnten Prozessschritt 210 sendet die V2X-Anwendung (bzw. die Anwendungs-Server-Entität 120) mittels einer Nachricht {((ServID, SID, Skey, Info)ENC_VT1-Cert)SIG_V2XApp-PrivK} die Dienste-Kennungsinformation (ServID) und die Sessions-Kennungsinformation (SID, zur Identifikation der Nachrichten-Session) sowie den symmetrischen Schlüssel Skey sowie eine Information (d.h. ein Nutzdateninhalt) als Nachricht an den ersten Kommunikationsteilnehmer 20 (VT1). Die Nachricht wird insbesondere mit VT1-Cert (zusätzlich zu der Sicherung nach Mobilfunkstandard) verschlüsselt. Abschließend signiert die V2X-Anwendung (bzw. die Anwendungs-Server-Entität 120) die Nachricht mit V2XApp-PrivK.
In einem elften Prozessschritt 211 fragt (im in Figur 1 angenommenen Beispiel) der erste Kommunikationsteilnehmer 20 über eine PC5-Nachricht (Mode 3 oder 4), d.h. eine Broadcast-Nachricht, in seiner Umgebung für die Anwendung registrierte andere Kommunikationsteilnehmer 21, 22, 23 (VT2/3/4) an (wobei wiederum der fünfte Kommunikationsteilnehmer 24 als außerhalb der Reichweite angenommen wird) an, ob sie an einer Nachrichten-Session (zur Sessions-Kennungsinformation SID) der Anwendung (der Dienste-Kennungsinformation ServID) teilnehmen möchten. Diese Informationen kann von sämtlichen Kommunikationsteilnehmer 20, 21, 22, 23 (in Sendereichweite) in der Umgebung gelesen werden.
Der zweite Kommunikationsteilnehmer 21 ermittelt in einem zwölften Prozessschritt 212 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt, jedoch wird in einem dreizehnten Prozessschritt 213 entschieden, nicht an der Nachrichten-Session teilzunehmen.
In dieser Hinsicht ist die Reaktion des dritten und vierten Kommunikationsteilnehmers 22, 23 anders:
   Wiederum ermittelt der dritte Kommunikationsteilnehmer 22 in einem vierzehnten Prozessschritt 214 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt. In einem fünfzehnten Prozessschritt 215 wird durch den dritten Kommunikationsteilnehmer 22 entschieden, an der Nachrichten-Session teilzunehmen. Dies führt in einem sechzehnten Prozessschritt 216 zu einer Nachricht des dritten Kommunikationsteilnehmer 22 an die V2X-Anwendung bzw. die Anwendungs-Server-Entität 120 {((Teilnahme, ServID, SID, Info)ENC_V2XApp-Cert, VT3-Cert)SIG_VT3-PrivK}, umfassend: den Teilnahmewunsch, die Dienste-Kennungsinformation, ServID, die Sessions-Kennungsinformation, SID und eine zu übertragende Information (gegebenenfalls verschlüsselt mit V2XApp-Cert) sowie dem eigenen Zertifikat bzw. Zertifikatsinformation VT3-Cert. Die gesamte Nachricht wird vom dritten Kommunikationsteilnehmer 22 (VT3) signiert. In einem siebzehnten Prozessschritt 217 prüft die V2X-Anwendung bzw. die Anwendungs-Server-Entität 120 die Signatur des dritten Kommunikationsteilnehmers 22 (VT3) mit V2X-RootCert sowie VT3-Cert und entschlüsselt gegebenenfalls die Nachricht mit V2XApp-PrivK. In einem achtzehnten Prozessschritt 218 wird der dritte Kommunikationsteilnehmer 22 durch die V2X-Anwendung bzw. die Anwendungs-Server-Entität 120 in die Nachrichten-Session aufgenommen. In einem neunzehnten Prozessschritt 219 sendet die V2X-Anwendung bzw. die Anwendungs-Server-Entität 120 mittels einer Nachricht { ((ServID, SID, Skey, Info, VT1-Cert)ENC_VT3-Cert)SIG_V2XApp-PrivK} die Dienste-Kennungsinformation, ServID, und die Sessions-Kennungsinformation, SID, (zur Identifikation der Session) sowie Skey, die Information und das Zertifikat des initiierenden Kommunikationsteilnehmers (d.h. vorliegend der erste Kommunikationsteilnehmer 20, VT1), VT1-Cert, als Nachricht an den dritten Kommunikationsteilnehmer 22. Diese Nachricht wird mit der zugehörigen Zertifikatsinformation (VT3-Cert) zusätzlich zu der Sicherung nach Mobilfunkstandard verschlüsselt. Abschließend signiert die V2X-Anwendung die Nachricht mit V2XApp-PrivK und in einem zwanzigsten Prozessschritt 220 informiert die V2X-Anwendung bzw. die Anwendungs-Server-Entität 120 auf gesichertem Weg den initiierenden Kommunikationsteilnehmer (d.h. im Beispiel den ersten Kommunikationsteilnehmer 20, VT1) mittels der Nachricht { ((ServID, SID, VT3-Cert, Info)ENC_VT1-Cert)SIG_V2XApp-PrivK}, dass der dritte Kommunikationsteilnehmer 22, VT3, in die Nachrichrten-Session mit aufgenommen werden möchte. Gleichfalls ermittelt der vierte Kommunikationsteilnehmer 23 in einem einundzwanzigsten Prozessschritt 221 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt. In einem zweiundzwanzigsten Prozessschritt 222 wird durch den vierten Kommunikationsteilnehmer 23 entschieden, an der Nachrichten-Session teilzunehmen. Dies führt in einem dreiundzwanzigsten Prozessschritt 223 zu einer Nachricht des vierten Kommunikationsteilnehmer 23 an die V2X-Anwendung bzw. die Anwendungs-Server-Entität 120 {((Teilnahme, ServID, SID, Info)ENC_V2XApp-Cert, VT4-Cert)SIG_VT4-PrivK}, umfassend: den Teilnahmewunsch, die Dienste-Kennungsinformation, ServID, die Sessions-Kennungsinformation, SID und eine zu übertragende Information (gegebenenfalls verschlüsselt mit V2XApp-Cert) sowie dem eigenen Zertifikat bzw. Zertifikatsinformation VT4-Cert. Die gesamte Nachricht wird vom vierten Kommunikationsteilnehmer 23 (VT4) signiert. In einem vierundzwanzigstens Prozessschritt 224 prüft die V2X-Anwendung bzw. die Anwendungs-Server-Entität 120 die Signatur des vierten Kommunikationsteilnehmers 23 (VT4) mit V2X-RootCert sowie VT4-Cert und entschlüsselt gegebenenfalls die Nachricht mit V2XApp-PrivK. In einem fünfundzwanzigsten Prozessschritt 225 wird der vierte Kommunikationsteilnehmer 23 durch die V2X-Anwendung bzw. die Anwendungs-Server-Entität 120 in die Nachrichten-Session aufgenommen. In einem sechsundzwanzigsten Prozessschritt 226 sendet die V2X-Anwendung bzw. die Anwendungs-Server-Entität 120 mittels einer Nachricht {((ServID, SID, Skey, Info, VT1-Cert)ENC_VT4-Cert)SIG_V2XApp-PrivK} die Dienste-Kennungsinformation, ServID, und die Sessions-Kennungsinformation, SID, (zur Identifikation der Session) sowie Skey, die Information und das Zertifikat des initiierenden Kommunikationsteilnehmers (d.h. vorliegend der erste Kommunikationsteilnehmer 20, VT1), VT1-Cert, als Nachricht an den dritten Kommunikationsteilnehmer 22. Diese Nachricht wird mit der zugehörigen Zertifikatsinformation (VT3-Cert) zusätzlich zu der Sicherung nach Mobilfunkstandard verschlüsselt. Abschließend signiert die V2X-Anwendung die Nachricht mit V2XApp-PrivK und in einem siebenundzwanzigsten Prozessschritt 227 informiert die V2X-Anwendung bzw. die Anwendungs-Server-Entität 120 auf gesichertem Weg den initiierenden Kommunikationsteilnehmer (d.h. im Beispiel den ersten Kommunikationsteilnehmer 20, VT1) mittels der Nachricht {((ServID, SID, VT4-Cert, Info)ENC_VT1-Cert)SIG_V2XApp-PrivK}, dass der vierte Kommunikationsteilnehmer 23, VT4, in die Nachrichten-Session mit aufgenommen werden möchte.
   In einem achtundzwanzigsten Prozessschritt 228 sendet der ersten Kommunikationsteilnehmer 20 (VT1) eine PC5-Nachricht {ServID, SID, ((VT3-Cert, VT4-Cert, lnfo)SIG_VT1-PrivK)ENC_Skey}, zum Start der Nachrichten-Session aus. Diese enthält: Die Dienste-Kennungsinformation, ServID, und die Sessions-Kennungsinformation, SID, für alle Kommunikationsteilnehmer sichtbar; die teilnehmenden Kommunikationsteilnehmer (im Beispiel der Figur 1 der dritte Kommunikationsteilnehmer 22 und der dritte Kommunikationsteilnehmer 23) können damit identifizieren, dass sie die Nachricht bearbeiten können. Weiterhin umfasst diese Broadcast-Nachricht, verschlüsselt mit dem Sessionkey Skey: Die Identität der anderen VT (über VTx-Cert) und die zu übertragende Information bzw. Nachrichteninhalt, sowie die Signatur über diese Daten (signiert mit VT1_PrivK); die Signatur ist im verschlüsselten Teil der Nachricht, damit andere (nicht an der Nachrichten-Session beteiligte) VT keine Rückschlüsse auf VT1 zeihen können.
   Der dritte Kommunikationsteilnehmer 22 (VT3) empfängt in einem neunundzwanzigsten Prozessschritt 229 diese Nachricht (aus dem achtundzwanzigstens Prozessschritt 228) und ermittelt anhand der Dienste-Kennungsinformation, ServID, und der Sessions-Kennungsinformation, SID, die Session. In einem dreißigsten Prozessschritt 230 entschlüsselt der dritte Kommunikationsteilnehmer 22 (VT3) die Nachricht mit der Sessions-Schlüsselinformation, Skey, und authentisiert in einem einunddreißigsten Prozessschritt 231 den ersten Kommunikationsteilnehmer 20 (VT1) mittels einer Prüfung der VT1-Signatur. In einem zweiunddreißigsten Prozessschritt 232 fügt der dritte Kommunikationsteilnehmer 22 die weiteren VT (im Beispiel der vierte Kommunikationsteilnehmer 23, VT4) mit Speicherung der jeweiligen Zertifikate (VT4-Cert) bei sich hinzu und wertet die Nutzinformation ("Info"), d.h. Parameter und weitere Informationen zur Session, aus.
   Entsprechend empfängt der vierte Kommunikationsteilnehmer 23 (VT4) in einem dreiunddreißigsten Prozessschritt 233 ebenfalls die Nachricht aus dem achtundzwanzigsten Prozessschritt 228 und ermittelt anhand der Dienste-Kennungsinformation, ServID, und der Sessions-Kennungsinformation, SID, die Session. In einem vierunddreißigsten Prozessschritt 234 entschlüsselt der vierte Kommunikationsteilnehmer 23 (VT4) die Nachricht mit der Sessions-Schlüsselinformation, Skey, und authentisiert in einem fünfunddreißigsten Prozessschritt 235 den ersten Kommunikationsteilnehmer 20 (VT1) mittels einer Prüfung der VT1-Signatur. In einem sechsunddreißigsten Prozessschritt 236 fügt der dritte Kommunikationsteilnehmer 23 die weiteren VT (im Beispiel der dritte Kommunikationsteilnehmer 22, VT3) mit Speicherung der jeweiligen Zertifikate (VT3-Cert) bei sich hinzu und wertet die Nutzinformation ("Info"), d.h. Parameter und weitere Informationen zur Session, aus.
   Der nicht an der Nachrichten-Session teilnehmende zweite Kommunikationsteilnehmer 21 verifiziert in einem siebenunddreißigstens Prozessschritt 237 ebenfalls die Autorisierung nach dem Empfang der Nachricht aus dem achtundzwanzigsten Prozessschritt 228. Da jedoch der zweite Kommunikationsteilnehmer 21 (VT2) nicht zum Teilnehmerkreis der Nachrichten-Session gehört, kann VT2 die Nachricht in einem achtunddreißigsten Prozessschritt 238 nicht entschlüsseln.
   Damit ist der zweite Abschnitt 600 abgeschlossen und es wird der dritte Abschnitt 700 ausgeführt, d.h. die operative Durchführung der Übermittlung von Nachrichteninhalten (Nachricht1, Nachricht2, Nachricht3) zwischen den zur Nachrichten-Session gehörenden Kommunikationsteilnehmern 20, 22, 23: Beispielhaft ist in Figur 1 dargestellt, dass in einem neununddreißigsten Prozessschritt 239 beispielsweise der erste Kommunikationsteilnehmer 20 eine Broadcast-Nachricht {ServID, SID, ((Nachricht1, lnfo)SIG_VT1-PrivK)ENC_Skey} übermittelt, dass in einem vierzigsten Prozessschritt 240 der dritte Kommunikationsteilnehmer 22 eine Broadcast-Nachricht {ServID, SID, ((Nachricht2, lnfo)SIG_VT3-PrivK)ENC_Skey} übermittelt und dass in einem einundvierzigsten Prozessschritt 241 der vierte Kommunikationsteilnehmer 23 eine Broadcast-Nachricht {ServID, SID, ((Nachricht3, Info)SIG_VT4-PrivK)ENC_Skey} übermittelt.
   Die Broadcast-Nachrichten der Nachrichten-Session können die Kommunikationsteilnehmer bzw. Fahrzeuge über die "offenen" Informationen ServID und SID identifizieren. Die Authentisierung der Kommunikationsteilnehmer bzw. Fahrzeuge erfolgt über die Signatur des sendenden VT (Kommunikationsteilnehmer) über die Nachricht und Info; die Signatur ist im verschlüsselten Teil der Nachricht, damit andere VT keine Rückschlüsse auf den sendenden VT ziehen können.
   Die Vertraulichkeit wird durch die Verschlüsselung (von Nachricht, Info und Signatur) mit der gemeinsam bekannten Sessions-Schlüsselinformation, Skey, sichergestellt.

Somit wird bei der ersten Variante des erfindungsgemäßen Verfahrens vorausgesetzt, dass (während des ersten Abschnitts 500) eine Öffentliche Schlüssel Infrastruktur, d.h. entsprechende Zertifikatsdaten von der Anwendungs-Server-Entität 120 an die Kommunikationsteilnehmer verteilt werden, d.h. eine Zertifikatserzeugung und ein Zertifikatsaustausch erfolgt. Die Generierung der im ersten Schritt des Verfahrens durch den die Nachrichten-Session initiierenden Kommunikationsteilnehmer generierten Sessions-Kennungsinformation findet im vierten Prozessschritt 204 statt. Durch die Kommunikation mit der Anwendungs-Server-Entität 120 im sechsten bis zehnten Prozessschritt 206 - 210 erhält der initiierende Kommunikationsteilnehmer die Sessions-Kennungsinformation, welche nachfolgend Teil der Anfrage-Broadcast-Nachricht (elfter Prozessschritt 211) zur Teilnahme der anderen Kommunikationsteilnehmer und Teil der Antwort-Nachricht oder der Antwort-Nachrichten (zwanzigster Prozessschritt 220 bzw. siebenundzwanzigster Prozessschritt 227) der teilnehmenden Kommunikationsteilnehmer ist. Die Antwort-Nachricht ist gemäß der ersten Variante unter Verwendung von Zertifikatsinformationen der Öffentliche Schlüssel Infrastruktur gesichert, insbesondere verschlüsselt und signiert.

Nachfolgend wird anhand der Figur 2 und einer Reihe verschiedener Prozessschritte die zweite Variante des erfindungsgemäßen Verfahrens im Detail beschrieben:
In einem ersten Prozessschritt 301 erfolgt die Generierung bzw. die Definition der Dienste-Kennungsinformation, Service-ID bzw. ServID als Identifikation der V2X-Anwendung. Die Dienste-Kennungsinformation sollte eindeutig sein; falls dies nicht der Fall ist, führt dies jedoch nicht zur Reduzierung der Sicherheit des Verfahrens bzw. zur Reduzierung des Schutzniveaus beim Austausch bzw. der Übermittlung der Nachrichteninhalte.
In einem zweiten Prozessschritt 302 findet eine Registrierung der Kommunikationsteilnehmer 20, 21, 22, 23, 24 für die V2X-Anwendung statt. Hierzu werden als Teil des zweiten Prozessschritts 302 in einem dritten Prozessschritt 303 mehrere Nachrichten ausgetauscht, wobei insbesondere die Dienste-Kennungsinformation den möglichen bzw. potenziellen Kommunikationsteilnehmern 20, 21, 22, 23, 24 zugesandt wird. Jeder Kommunikationsteilnehmer 20, 21, 22, 23, 24, welcher die V2X-Anwendung nutzen möchte, muss sich bei der Anwendungs-Server-Entität 120 registrieren. Gemäß der zweiten Variante des erfindungsgemäßen Verfahrens wird keine Öffentliche Schlüssel Infrastruktur (mit Ausstellung bzw. Austausch des jeweiligen V2X-Anwendung-Zertifikats für jeden Kommunikationsteilnehmer 20, 21, 22, 23, 24 implementiert, sondern lediglich eine verschlüsselte Kommunikation innerhalb der Gruppe der an der Nachrichten-Session teilnehmenden Kommunikationsteilnehmer realisiert. Die Kommunikation über das Mobilfunknetz (d.h. mit der Anwendungs-Server-Entität 120) kann dabei, wie bei Smartphone Apps üblich, mit Username/Passwort und Verschlüsselung basierend auf Server-Zertifikaten, gesichert, d.h. authentisiert und verschlüsselt werden. Der erste Abschnitt 500 ist damit beendet; es beginnt der zweite Abschnitt 600.
In einem vierten Prozessschritt 304 wird die Kommunikation unter Nutzung der V2X-Anwendung gestartet. Im Beispiel der Figur 2 wird davon ausgegangen, dass dies durch den ersten Kommunikationsteilnehmer 20 getriggert wird. Somit generiert in einem fünften Prozessschritt 305 der erste Kommunikationsteilnehmer 20 pseudozufällig eine Sessions-Kennungsinformation (Session-ID, SID). In einem sechsten Prozessschritt 306 sendet der erste Kommunikationsteilnehmer 20 eine Nachricht {Starte Session, ServID, SID, Info}, dass eine Nachrichten-Session gestartet werden soll, an die Anwendungs-Server-Entität 120. Diese Nachricht enthält die Dienste-Kennungsinformation, ServID, sowie die Sessions-Kennungsinformation, SID, sowie ggf. Parameter und Informationen. In einem siebenten Prozessschritt 307 prüft die Anwendungs-Server-Entität 120 (bzw. V2X-Anwendung) die Nachricht. In einem achten Prozessschritt 308 setzt die Anwendungs-Server-Entität 120 (bzw. V2X-Anwendung) eine Nachrichten-Session des Dienstes (d.h. entsprechend der Dienste-Kennungsinformation, ServID) mit der mitgelieferten Sessions-Kennungsinformation, Session-ID (SID), auf. In einem neunten Prozessschritt 309 generiert die V2X-Anwendung einen symmetrischen Schlüssel (Sessions-Schlüsselinformation, Skey) für die Verschlüsslung der Nachrichten für die Nachrichten-Session (bezogen auf die Sessions-Kennungsinformation, SID).
In einem zehnten Prozessschritt 310 sendet die V2X-Anwendung (bzw. die Anwendungs-Server-Entität 120) mittels einer Nachricht {ServID, SID, Skey, Info} die Dienste-Kennungsinformation (ServID) und die Sessions-Kennungsinformation (SID, zur Identifikation der Nachrichten-Session) sowie den symmetrischen Schlüssel (Sessions-Schlüsselinformation, Skey) sowie eine Information (d.h. ein Nutzdateninhalt) als Nachricht an den ersten Kommunikationsteilnehmer 20 (VT1). Die Nachricht wird insbesondere nach Mobilfunkstandard gesichert bzw. verschlüsselt.
In einem elften Prozessschritt 311 fragt (im in Figur 2 angenommenen Beispiel) der erste Kommunikationsteilnehmer 20 über eine PC5-Nachricht (Mode 3 oder 4), d.h. eine Broadcast-Nachricht, in seiner Umgebung für die Anwendung registrierte andere Kommunikationsteilnehmer 21, 22, 23 (VT2/3/4) an (wobei wiederum der fünfte Kommunikationsteilnehmer 24 als außerhalb der Reichweite angenommen wird) an, ob sie an einer Nachrichten-Session (zur Sessions-Kennungsinformation SID) der Anwendung (der Dienste-Kennungsinformation ServID) teilnehmen möchten. Diese Informationen kann von sämtlichen Kommunikationsteilnehmer 20, 21, 22, 23 (in Sendereichweite) in der Umgebung gelesen werden.
Der zweite Kommunikationsteilnehmer 21 ermittelt in einem zwölften Prozessschritt 312 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt, jedoch wird in einem dreizehnten Prozessschritt 313 entschieden, nicht an der Nachrichten-Session teilzunehmen.
In dieser Hinsicht ist die Reaktion des dritten und vierten Kommunikationsteilnehmers 22, 23 anders:
   Wiederum ermittelt der dritte Kommunikationsteilnehmer 22 in einem vierzehnten Prozessschritt 314 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt. In einem fünfzehnten Prozessschritt 315 wird durch den dritten Kommunikationsteilnehmer 22 entschieden, an der Nachrichten-Session teilzunehmen. Dies führt in einem sechzehnten Prozessschritt 316 zu einer Nachricht des dritten Kommunikationsteilnehmer 22 an die V2X-Anwendung bzw. die Anwendungs-Server-Entität 120 {Teilnahme, ServID, SID, Info} umfassend: den Teilnahmewunsch, die Dienste-Kennungsinformation, ServID, die Sessions-Kennungsinformation, SID und eine zu übertragende Information. In einem siebzehnten Prozessschritt 317 prüft die V2X-Anwendung bzw. die Anwendungs-Server-Entität 120 die Nachricht. In einem achtzehnten Prozessschritt 318 wird der dritte Kommunikationsteilnehmer 22 durch die V2X-Anwendung bzw. die Anwendungs-Server-Entität 120 in die Nachrichten-Session aufgenommen. In einem neunzehnten Prozessschritt 319 sendet die V2X-Anwendung bzw. die Anwendungs-Server-Entität 120 mittels einer Nachricht {ServID, SID, Skey, Info, VT1} die Dienste-Kennungsinformation, ServID, und die Sessions-Kennungsinformation, SID, (zur Identifikation der Session) sowie Sessions-Schlüsselinformation, Skey, die Information und eine Identitätsinformation bzw. Kennung des initiierenden Kommunikationsteilnehmers (d.h. vorliegend der erste Kommunikationsteilnehmer 20, VT1), VT1 als Nachricht an den dritten Kommunikationsteilnehmer 22. In einem zwanzigsten Prozessschritt 320 informiert die V2X-Anwendung bzw. die Anwendungs-Server-Entität 120 den initiierenden Kommunikationsteilnehmer (d.h. im Beispiel den ersten Kommunikationsteilnehmer 20, VT1) mittels der Nachricht {ServID, SID, Skey, Info, VT3}, dass der dritte Kommunikationsteilnehmer 22, VT3, in die Nachrichten-Session mit aufgenommen werden möchte.
   Gleichfalls ermittelt der vierte Kommunikationsteilnehmer 23 in einem einundzwanzigsten Prozessschritt 321 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt. In einem zweiundzwanzigsten Prozessschritt 322 wird durch den vierten Kommunikationsteilnehmer 23 entschieden, an der Nachrichten-Session teilzunehmen. Dies führt in einem dreiundzwanzigsten Prozessschritt 323 zu einer Nachricht des vierten Kommunikationsteilnehmer 23 an die V2X-Anwendung bzw. die Anwendungs-Server-Entität 120 {Teilnahme, ServID, SID, Info} umfassend: den Teilnahmewunsch, die Dienste-Kennungsinformation, ServID, die Sessions-Kennungsinformation, SID und eine zu übertragende Information. In einem vierundzwanzigsten Prozessschritt 324 prüft die V2X-Anwendung bzw. die Anwendungs-Server-Entität 120 die Nachricht. In einem fünfundzwanzigsten Prozessschritt 325 wird der vierte Kommunikationsteilnehmer 23 durch die V2X-Anwendung bzw. die Anwendungs-Server-Entität 120 in die Nachrichten-Session aufgenommen. In einem sechsundzwanzigsten Prozessschritt 326 sendet die V2X-Anwendung bzw. die Anwendungs-Server-Entität 120 mittels einer Nachricht {ServID, SID, Skey, Info, VT1} die Dienste-Kennungsinformation, ServID, und die Sessions-Kennungsinformation, SID, (zur Identifikation der Session) sowie Sessions-Schlüsselinformation, Skey, die Information und eine Identitätsinformation bzw. Kennung des initiierenden Kommunikationsteilnehmers (d.h. vorliegend der erste Kommunikationsteilnehmer 20, VT1), VT1 als Nachricht an den vierten Kommunikationsteilnehmer 23. In einem siebenundzwanzigsten Prozessschritt 327 informiert die V2X-Anwendung bzw. die Anwendungs-Server-Entität 120 den initiierenden Kommunikationsteilnehmer (d.h. im Beispiel den ersten Kommunikationsteilnehmer 20, VT1) mittels der Nachricht {ServID, SID, Skey, Info, VT4}, dass der vierte Kommunikationsteilnehmer 23, VT4, in die Nachrichten-Session mit aufgenommen werden möchte. In einem achtundzwanzigsten Prozessschritt 328 sendet der ersten Kommunikationsteilnehmer 20 (VT1) eine PC5-Nachricht {ServID, SID, (VT3, VT4, Info)ENC_Skey} zum Start der Nachrichten-Session aus. Diese enthält: Die Dienste-Kennungsinformation, ServID, und die Sessions-Kennungsinformation, SID, für alle Kommunikationsteilnehmer sichtbar; die teilnehmenden Kommunikationsteilnehmer (im Beispiel der Figur 2 der dritte Kommunikationsteilnehmer 22 und der dritte Kommunikationsteilnehmer 23) können damit identifizieren, dass sie die Nachricht bearbeiten können. Weiterhin umfasst diese Broadcast-Nachricht: Die Identität der anderen VT (über VTx) und die zu übertragende Information bzw. Nachrichteninhalt, verschlüsselt mit der Sessions-Schlüsselinformation, Skey.
   Der dritte Kommunikationsteilnehmer 22 (VT3) empfängt in einem neunundzwanzigsten Prozessschritt 329 diese Nachricht (aus dem achtundzwanzigsten Prozessschritt 328) und ermittelt anhand der Dienste-Kennungsinformation, ServID, und der Sessions-Kennungsinformation, SID, die Session. In einem dreißigsten Prozessschritt 330 entschlüsselt der dritte Kommunikationsteilnehmer 22 (VT3) die Nachricht mit der Sessions-Schlüsselinformation, Skey. In einem einunddreißigsten Prozessschritt 331 fügt der dritte Kommunikationsteilnehmer 22 die weiteren VT (im Beispiel der vierte Kommunikationsteilnehmer 23, VT4) bei sich hinzu und wertet die Nutzinformation ("Info"), d.h. Parameter und weitere Informationen zur Session, aus.
   Entsprechend empfängt der vierte Kommunikationsteilnehmer 23 (VT4) in einem zweiunddreißigsten Prozessschritt 332 diese Nachricht (aus dem achtundzwanzigsten Prozessschritt 328) und ermittelt anhand der Dienste-Kennungsinformation, ServID, und der Sessions-Kennungsinformation, SID, die Session. In einem dreiunddreißigsten Prozessschritt 333 entschlüsselt der vierte Kommunikationsteilnehmer 23 (VT4) die Nachricht mit der Sessions-Schlüsselinformation, Skey. In einem vierunddreißigsten Prozessschritt 334 fügt der vierte Kommunikationsteilnehmer 23 die weiteren VT (im Beispiel der dritte Kommunikationsteilnehmer 22, VT3) bei sich hinzu und wertet die Nutzinformation ("Info"), d.h. Parameter und weitere Informationen zur Session, aus. Der nicht an der Nachrichten-Session teilnehmende zweite Kommunikationsteilnehmer 21 verifiziert in einem fünfunddreißigsten Prozessschritt 235 ebenfalls die Autorisierung nach dem Empfang der Nachricht aus dem achtundzwanzigsten Prozessschritt 328. Da jedoch der zweite Kommunikationsteilnehmer 21 (VT2) nicht zum Teilnehmerkreis der Nachrichten-Session gehört, kann VT2 (bzw. wird VT2) die Nachricht in einem sechsunddreißigsten Prozessschritt 236 nicht entschlüsseln.
   Damit ist der zweite Abschnitt 600 abgeschlossen und es wird der dritte Abschnitt 700 ausgeführt, d.h. die operative Durchführung der Übermittlung von Nachrichteninhalten (Nachricht1, Nachricht2, Nachricht3) zwischen den zur Nachrichten-Session gehörenden Kommunikationsteilnehmern 20, 22, 23: Beispielhaft ist in Figur 2 dargestellt, dass in einem siebenunddreißigsten Prozessschritt 237 beispielsweise der erste Kommunikationsteilnehmer 20 eine Broadcast-Nachricht {ServID, SID, (Nachricht1, Info)ENC_Skey} übermittelt, dass in einem achtunddreißigsten Prozessschritt 238 der dritte Kommunikationsteilnehmer 22 eine Broadcast-Nachricht {ServID, SID, (Nachricht2, Info)ENC_Skey} übermittelt und dass in einem neununddreißigsten Prozessschritt 239 der vierte Kommunikationsteilnehmer 23 eine Broadcast-Nachricht {ServID, SID, (Nachricht3, Info)ENC_Skey} übermittelt.
   Die Broadcast-Nachrichten der Nachrichten-Session können die Kommunikationsteilnehmer bzw. Fahrzeuge über die "offenen" Informationen ServID und SID identifizieren. Die Vertraulichkeit wird durch die Verschlüsselung (von Nachricht und Info) mit der gemeinsam bekannten Sessions-Schlüsselinformation, Skey, sichergestellt.

Somit wird bei der zweiten Variante des erfindungsgemäßen Verfahrens vorausgesetzt, dass (während des ersten Abschnitts 500) lediglich die Dienste-Kennungsinformation von der Anwendungs-Server-Entität 120 an die Kommunikationsteilnehmer verteilt wird. Die Generierung der im ersten Schritt des Verfahrens durch den die Nachrichten-Session initiierenden Kommunikationsteilnehmer generierten Sessions-Kennungsinformation findet im vierten Prozessschritt 304 statt. Durch die Kommunikation mit der Anwendungs-Server-Entität 120 im sechsten bis zehnten Prozessschritt 306 - 310 erhält der initiierende Kommunikationsteilnehmer die Sessions-Kennungsinformation, welche nachfolgend Teil der Anfrage-Broadcast-Nachricht (elfter Prozessschritt 311) zur Teilnahme der anderen Kommunikationsteilnehmer und Teil der Antwort-Nachricht oder der Antwort-Nachrichten (zwanzigster Prozessschritt 320 bzw. siebenundzwanzigster Prozessschritt 327) der teilnehmenden Kommunikationsteilnehmer ist. Die Antwort-Nachricht ist gemäß der zweiten Variante lediglich unter Nutzung von Mechanismen des Mobilfunknetzes gesichert, insbesondere als eine eine Transportverschlüsselung nutzende und auf der Basis von Registrierungsdaten verschlüsselte Nachricht.

Nachfolgend wird anhand der Figur 3 und einer Reihe verschiedener Prozessschritte die dritte Variante des erfindungsgemäßen Verfahrens im Detail beschrieben:
In einem ersten Prozessschritt 401 erfolgt die Implementierung der public key infrastructure-Komponenten (öffentliche Schlüssel Infrastruktur-Komponenten) bzw. der Zertifikatsautorität (certificate authority, CA) durch die Anwendungs-Server-Entität 120 für die Kommunikationsteilnehmer 20, 21, 22, 23, 24 bzw. Verkehrsteilnehmer (VT). Ferner wird eine Dienste-Kennungsinformation (nachfolgend auch als Service-ID bzw. ServID bezeichnet) generiert bzw. definiert. Diese Dienste-Kennungsinformation dient als Identifikation der V2X-Anwendung.
In einem zweiten Prozessschritt 402 findet eine Registrierung der Kommunikationsteilnehmer 20, 21, 22, 23, 24 für die V2X-Anwendung statt. Hierzu werden als Teil des zweiten Prozessschritts 402 in einem dritten Prozessschritt 403 mehrere Nachrichten ausgetauscht, wobei insbesondere die Dienste-Kennungsinformation den möglichen bzw. potenziellen Kommunikationsteilnehmern 20, 21, 22, 23, 24 zugesandt wird. Jeder Kommunikationsteilnehmer 20, 21, 22, 23, 24, welcher die V2X-Anwendung nutzen möchte, muss sich bei der Anwendungs-Server-Entität 120 registrieren. Dies beinhaltet auch die Ausstellung des jeweiligen V2X-Anwendung-Zertifikats für jeden Kommunikationsteilnehmer 20, 21, 22, 23, 24 (nachfolgend auch als VTx-Cert bzw. Zertifikatsinformation für den VTx bezeichnet, basierend auf dem privaten Schlüssel, nachfolgend auch als VTx-PrivK bzw. Private-Schlüssel-Information bezeichnet). Auch erhält jeder Kommunikationsteilnehmer 20, 21, 22, 23, 24 dabei das verwendete Root-Zertifikat der V2X-Anwendung V2XApp-Cert. Der erste Abschnitt 500 ist damit beendet; es beginnt der zweite Abschnitt 600.
In einem vierten Prozessschritt 404 wird eine gesicherte V2X-Kommunikation (bzw. eine Übermittlung von Nachrichteninhalten in verschlüsselter Form) unter Nutzung der V2X-Anwendung gestartet. Im Beispiel der Figur 3 wird davon ausgegangen, dass dies durch den ersten Kommunikationsteilnehmer 20 getriggert wird. Somit generiert in einem fünften Prozessschritt 405 der erste Kommunikationsteilnehmer 20 pseudozufällig eine Sessions-Kennungsinformation (Session-ID, SID). In einem sechsten Prozessschritt 406 fragt der erste Kommunikationsteilnehmer 20 mittels einer PC5-Nachricht (Mode 3 oder 4) bzw. Broadcast-Nachricht {(ServID, SID, VT1-ID, VT1-Cert, AnfrageSession, lnfo)SIG_VT1-PrivK} in seiner Umgebung für die Anwendung registrierte andere Kommunikationsteilnehmer 21, 22, 23 (VT2/3/4) (wobei wiederum der fünfte Kommunikationsteilnehmer 24 als außerhalb der Reichweite angenommen wird) an, ob sie an einer Nachrichten-Session (zur Sessions-Kennungsinformation SID) der Anwendung (der Dienste-Kennungsinformation ServID) teilnehmen möchten. Außerdem wird VT1-Cert mitgesendet und dann die gesamte Nachricht mit VT1-PrivK signiert. Diese Informationen kann bzw. können von sämtlichen Kommunikationsteilnehmer 20, 21, 22, 23 (in Sendereichweite) in der Umgebung gelesen werden.
In einem siebten Prozessschritt 407 authentisiert der zweite Kommunikationsteilnehmer 21 den initiierenden (ersten) Kommunikationsteilnehmer 20 (VT1) durch Prüfung der VT1-Signatur mit der (dem zweiten Kommunikationsteilnehmer 21 (als registrierter Nutzer der V2X-Anwendung) vorliegenden) Zertifikatsinformation VT1-Cert. Der zweite Kommunikationsteilnehmer 21 ermittelt in einem achten Prozessschritt 408 die angefragte Anwendung (über die Dienste-Kennungsinformation, ServID, inkl. der Sessions-Kennungsinformation, SID) und stellt fest, dass eine Registrierung für die angefragte V2X-Anwendung vorliegt, jedoch wird in einem neunten Prozessschritt 409 entschieden, nicht an der Nachrichten-Session teilzunehmen.
In dieser Hinsicht ist die Reaktion des dritten Kommunikationsteilnehmers 22 anders: Auch der dritte Kommunikationsteilnehmer 22 authentisiert in einem zehnten Prozessschritt 410 den initiierenden (ersten) Kommunikationsteilnehmer 20 (VT1) durch Prüfung der VT1-Signatur mit der (dem dritten Kommunikationsteilnehmer 22 (als registrierter Nutzer der V2X-Anwendung) vorliegenden) Zertifikatsinformation VT1-Cert. Der dritte Kommunikationsteilnehmer 22 ermittelt in einem elften Prozessschritt 411 die angefragte Anwendung (über die Dienste-Kennungsinformation, ServID, inkl. der Sessions-Kennungsinformation, SID), stellt fest, dass eine Registrierung für die angefragte V2X-Anwendung vorliegt, und entscheidet in einem zwölften Prozessschritt 412, an der Nachrichten-Session teilzunehmen. Dies führt in einem dreizehnten Prozessschritt 413 zu einer Broadcast-Nachricht {((Teilnahme-Nachricht, ServID, SID, VT3-ID, VT3-Cert, TeilnahmeSession, lnfo)SIG_VT3-PrivK} des dritten Kommunikationsteilnehmer 22, umfassend: den Teilnahmewunsch, die Dienste-Kennungsinformation, ServID, die Sessions-Kennungsinformation, SID, seiner Identität VT3-ID, eine zu übertragende Information sowie dem eigenen Zertifikat bzw. Zertifikatsinformation VT3-Cert. Die gesamte Nachricht wird vom dritten Kommunikationsteilnehmer 22 (VT3) signiert. In einem vierzehnten Prozessschritt 414 wird diese Nachricht vom ersten Kommunikationsteilnehmer 20 (VT1) empfangen; der erste Kommunikationsteilnehmer 20 (VT1) authentisiert den dritten Kommunikationsteilnehmer 22 (VT3) über dessen ID und Zertifikat als registrierten Nutzer der V2X-Anwendung und nimmt ihn in die Session auf, d.h. merkt sich die ID-Information (bzw. Kennung) und das Zertifikat. Desgleichen wird die Nachricht in einem fünfzehnten Prozessschritt 415 vom vierten Kommunikationsteilnehmer 23 (VT4) empfangen; der vierte Kommunikationsteilnehmer 22 (VT4) authentisiert den dritten Kommunikationsteilnehmer 22 (VT3) über dessen ID und Zertifikat als registrierten Nutzer der V2X-Anwendung und nimmt ihn in die Session auf, d.h. merkt sich die ID-Information (bzw. Kennung) und das Zertifikat. Demgegenüber empfängt der zweite Kommunikationsteilnehmer 21 zwar die Nachricht (des dritten Kommunikationsteilnehmers 22), verwirft diese aber in einem sechzehnten Prozessschritt 416, da keine Teilnahme gewünscht ist.
Gleichfalls ist auch die Reaktion des vierten Kommunikationsteilnehmers 23 (auf die Nachricht des ersten Kommunikationsteilnehmer 20 im sechsten Prozessschritt 406) anders: Auch der vierte Kommunikationsteilnehmer 23 authentisiert in einem siebzehnten Prozessschritt 417 den initiierenden (ersten) Kommunikationsteilnehmer 20 (VT1) durch Prüfung der VT1-Signatur mit der (dem vierten Kommunikationsteilnehmer 23 (als registrierter Nutzer der V2X-Anwendung) vorliegenden) Zertifikatsinformation VT1-Cert.
Der vierte Kommunikationsteilnehmer 23 ermittelt in einem achtzehnten Prozessschritt 418 die angefragte Anwendung (über die Dienste-Kennungsinformation, ServID, inkl. der Sessions-Kennungsinformation, SID), stellt fest, dass eine Registrierung für die angefragte V2X-Anwendung vorliegt, und entscheidet in einem neunzehnten Prozessschritt 419, an der Nachrichten-Session teilzunehmen. Dies führt in einem zwanzigsten Prozessschritt 420 zu einer Broadcast-Nachricht {((Teilnahme-Nachricht, ServID, SID, VT4-ID, VT4-Cert, TeilnahmeSession, lnfo)SIG_VT4-PrivK} des vierten Kommunikationsteilnehmers 23, umfassend: den Teilnahmewunsch, die Dienste-Kennungsinformation, ServID, die Sessions-Kennungsinformation, SID, seiner Identität VT4-ID, eine zu übertragende Information sowie dem eigenen Zertifikat bzw. Zertifikatsinformation VT4-Cert. Die gesamte Nachricht wird vom vierten Kommunikationsteilnehmer 23 (VT4) signiert. In einem einundzwanzigsten Prozessschritt 421 wird diese Nachricht vom ersten Kommunikationsteilnehmer 20 (VT1) empfangen; der erste Kommunikationsteilnehmer 20 (VT1) authentisiert den vierten Kommunikationsteilnehmer 23 (VT4) über dessen ID und Zertifikat als registrierten Nutzer der V2X-Anwendung und nimmt ihn in die Session auf, d.h. merkt sich die ID-Information (bzw. Kennung) und das Zertifikat. Desgleichen wird die Nachricht in einem zweiundzwanzigsten Prozessschritt 422 vom dritten Kommunikationsteilnehmer 22 (VT3) empfangen; der dritte Kommunikationsteilnehmer 22 (VT3) authentisiert den vierten Kommunikationsteilnehmer 23 (VT4) über dessen ID und Zertifikat als registrierten Nutzer der V2X-Anwendung und nimmt ihn in die Session auf, d.h. merkt sich die ID-Information (bzw. Kennung) und das Zertifikat. Demgegenüber empfängt der zweite Kommunikationsteilnehmer 21 zwar die Nachricht (des vierten Kommunikationsteilnehmers 23), verwirft diese aber in einem dreiundzwanzigsten Prozessschritt 423, da keine Teilnahme gewünscht ist.
Damit ist der zweite Abschnitt 600 abgeschlossen und es wird der dritte Abschnitt 700 ausgeführt, d.h. die operative Durchführung der Übermittlung von Nachrichteninhalten (Nachricht1, Nachricht2) zwischen den zur Nachrichten-Session gehörenden Kommunikationsteilnehmern 20, 22, 23, d.h. alle teilnehmende Kommunikationsteilnehmer 20, 22, 23 (bzw. VT) können Nachrichten Empfängerspezifisch verschlüsselt an andere teilnehmende Kommunikationsteilnehmer 20, 22, 23 (bzw. VT) senden. Broadcast-Nachrichten der Nachrichten-Session können die Kommunikationsteilnehmer (VT) über die "offenen" Informationen ServID und SID identifizieren; nur der jeweilige Empfänger kann eine betreffende Nachricht mit seinem privaten Schlüssel entschlüsseln. Beispielhaft ist in Figur 3 dargestellt, dass in einem vierundzwanzigsten Prozessschritt 224 beispielsweise der erste Kommunikationsteilnehmer 20 eine Broadcast-Nachricht {ServID, SID, VT1-ID(Sender), VT4-ID (Empfänger), ((Nachricht1, Info)ENC_VT4-Cert)SIG_VT1-PrivK } übermittelt, welche vom vierten Kommunikationsteilnehmer 23 (VT4) in einem fünfundzwanzigsten Prozessschritt 425 empfangen und mit VT4-PrivK entschlüsselt wird. Ferner ist in Figur 3 dargestellt, dass in einem sechsundzwanzigsten Prozessschritt 226 der vierte Kommunikationsteilnehmer 23 (VT4) eine Broadcast-Nachricht {ServID, SID, VT4-ID(Sender), VT3-ID (Empfänger), ((Nachricht2, Info)ENC_VT3-Cert)SIG_VT4-PrivK } übermittelt, welche vom dritten Kommunikationsteilnehmer 22 (VT3) in einem siebenundzwanzigsten Prozessschritt 427 empfangen und mit VT3-PrivK entschlüsselt wird.
Die Broadcast-Nachrichten der Nachrichten-Session können die Kommunikationsteilnehmer bzw. Fahrzeuge über die "offenen" Informationen ServID und SID identifizieren. Die Authentisierung der Kommunikationsteilnehmer bzw. Fahrzeuge erfolgt über die Signatur des sendenden VT (Kommunikationsteilnehmer) über die Nachricht und Info. Für alle Kommunikationsteilnehmer bzw. Fahrzeuge sind Sender und Empfänger "offen" zu erkennen; nur der Empfänger kann die Nachricht mit seinem privaten Schlüssel entschlüsseln.

Somit wird bei der dritten Variante des erfindungsgemäßen Verfahrens vorausgesetzt, dass (während des ersten Abschnitts 500) eine Öffentliche Schlüssel Infrastruktur, d.h. entsprechende Zertifikatsdaten von der Anwendungs-Server-Entität 120 an die Kommunikationsteilnehmer verteilt werden, d.h. eine Zertifikatserzeugung und ein Zertifikatsaustausch erfolgt. Die Generierung der im ersten Schritt des Verfahrens durch den die Nachrichten-Session initiierenden Kommunikationsteilnehmer generierten Sessions-Kennungsinformation findet im vierten Prozessschritt 404 statt. Im Gegensatz zu der ersten und zweiten Variante des erfindungsgemäßen Verfahrens findet danach keine Kommunikation mehr mit der Anwendungs-Server-Entität 120 statt, sondern die Kommunikation erfolgt ausschließlich zwischen den Kommunikationsteilnehmer, d.h. "Peer-to-Peer". Die Anfrage-Broadcast-Nachricht entspricht dem sechsten Prozessschritt 406 und die Antwort-Nachrichten entsprechen dem dreizehnten Prozessschritt 413 bzw. dem zwanzigsten Prozessschritt 420.

Erfindungsgemäß ist es somit vorteilhaft möglich, eine gesicherte Kommunikation zwischen Kommunikationsteilnehmern, insbesondere Verkehrsteilnehmer, zu realisieren, insbesondere unter Realisierung einer Authentisierung und Verschlüsselung für direkte (sidelink) V2X-Kommunikation.
Das Schlüsselmanagement für die Authentisierung und Verschlüsselung für (V2X-) Anwendungen wird hierbei insbesondere nicht über die (komplexe Architektur der) Anwendungsebene der V2X-Kommunikation, d.h. insbesondere die (standardisierten) V2X-Applications, implementiert, sondern über "normalen" Mobilfunk (2G/3G/4G/5G). Dies bedeutet, dass das Schlüsselmanagement für die Authentisierung der V2X-Kommunikationsteilnehmer und für die Verschlüsselung der V2X-Kommunikation über eine Mobilfunk-App (vgl. Apps für mobile Betriebssysteme wie Android oder iOS bzw. die V2X-Anwendung) realisiert wird. So ist es erfindungsgemäß vorteilhaft möglich, dass es Diensteanbietern erleichtert wird, mit der Kombination aus (standardisierter) V2X-Kommunikation, (standardisiertem) Mobilfunk und etablierten Sicherheitsmechanismen, in ihren V2X-Anwendungen eine gegenseitige Authentisierung der Verkehrsteilnehmer (VT) bzw. Kommunikationsteilnehmer und eine Verschlüsselung zu implementieren.
Für die Implementierung können je nach Anforderungen (existierende) Schlüsselmanagementverfahren eingesetzt werden. Die verschiedenen Schlüsselmanagementverfahren ermöglichen unterschiedlich Anwendungsszenarien und Schutzziele. Grundsätzlich können dabei verschiedene Varianten unterschieden werden, beispielsweise unter Nutzung von symmetrischen und asymmetrischen Verfahren, der Implementierung einer eigen PKI (Öffentliche Schlüssel Infrastruktur) /CA und/oder die Notwendigkeit der Kommunikation mit der V2X-Anwendung vor bzw. während der V2X-Kommunikations-Session.
Gemäß der ersten Variante (vgl. Figur 1) wird eine Umsetzung dargestellt, bei der eine gegenseitige Authentisierung und Verschlüsselung bei Wahrung der Anonymität mit Hilfe der Öffentliche Schlüssel Infrastruktur PKI /CA (unter Nutzung von asymmetrischen Verfahren und Kommunikation mit der V2X-Anwendung, d.h. der Anwendungs-Server-Entität 120) erfolgt.
Gemäß der zweiten Variante (vgl. Figur 2) wird eine Umsetzung dargestellt, bei der (nur) eine Verschlüsselung für die Kommunikation der VT erfolgt, wobei lediglich symmetrische Verfahren verwendet werden, d.h. es erfolgt ein Verzicht auf komplexere Mechanismen und der Verwendung der Öffentliche Schlüssel Infrastruktur PKI /CA und asymmetrische Verfahren; auch hier ist eine Kommunikation mit der V2X-Anwendung, d.h. der Anwendungs-Server-Entität 120, notwendig.
Gemäß der dritten Variante (vgl. Figur 3) wird eine PKI / CA-basierte Umsetzung dargestellt, bei der die Kommunikationsteilnehmer (VT) anderen (einzelnen) Kommunikationsteilnehmern (VT) verschlüsselte Nachrichten zusenden können (verschlüsselte Peer-to-Peer V2X-Kommuniktion innerhalb einer Gruppe). Dabei sind die V2X-Anwendung-Benutzerkennungen (IDs) der VT und deren Zertifikate für andere in der V2X-Kommunikation sichtbar. Dafür können die VT die Session ohne Kommunikation mit der V2X-Anwendung (d.h. der Anwendungs-Server-Entität 120) aufbauen und nutzen.

Als konkrete Lösung wird beispielhaft die folgende Anwendung (gemäß der ersten Variante) dargestellt: Sobald ein VT bzw. ein Kommunikationsteilnehmer die V2X-Anwendung nutzen möchte (Trigger), sendet dieser eine V2X-Broadcast-Nachricht aus, wobei eine V2X-Anwendungs-ID (ServID ) und eine (zufällig generierte) Session-ID (SID) ausgesendet wird. Gleichzeitig informiert er die Serverkomponente der V2X-Anwendung über Mobilfunk über seine Teilnehmer-ID und die neue Session-ID. Da der VT bei der Serverkomponente authentisiert ist und mit dieser verschlüsselt kommuniziert (vgl. andere Smartphone-Apps), weiß die Serverkomponente, welcher VT die Session starten möchte. Andere VT, die die V2X-Anwendung ebenfalls nutzen und an der Session teilnehmen möchten, melden sich über Mobilfunk mit der Session-ID auch bei der Serverkomponente. Anschließend weiß die Serverkomponente, welche VT an der V2X-Kommunikation (Session-ID) teilnehmen wollen und kann die notwendigen Schlüssel und Informationen über Mobilfunk an die / zwischen den VT senden / austauschen. Die Identifikation der Nachrichten, die zur aktuellen Session der V2X-Anwendunggehören, erfolgt anhand der Session-ID (kann von allen VT in der Umgebung gelesen werden). Der weitere Nachrichteninhalt ist verschlüsselt und kann nur von den in der Serverkomponente "registrierten" VT für die Session entschlüsselt werden. Außerdem können sich die VT auch gegenüber den anderen VT authentisieren.

Im Folgenden wird für Sicherheitsfunktionen eine V2X-Anwendung spezifische Public-Key-Infrastruktur (PKI / Certificate Authority (CA) verwendet. Die Authentisierung der Nachrichten gegenüber der V2X-Anwendung und die Verschlüsselung auf dem Weg zur V2X-Anwendung wird hier mit den PKI implementiert.

## Patentansprüche

1. Verfahren zum Übermitteln eines Nachrichteninhalts, bezüglich eines Dienstes, in verschlüsselter Form zwischen einem ersten Kommunikationsteilnehmer (20) und wenigstens einem zweiten Kommunikationsteilnehmer (21), wobei die Übermittlung des Nachrichteninhalts mittels Broadcast-Nachrichten einer PC5-Sidelink Funktionalität, insbesondere unter Nutzung der Mode-4-Funktionalität, erfolgt, wobei sowohl der erste Kommunikationsteilnehmer (20) als auch der wenigstens eine zweite Kommunikationsteilnehmer (21) ein Client-Computergerät zur Ausführung von Software-Code einer Software-Client-Anwendung ist, wobei die Software-Client-Anwendung sowohl des ersten Kommunikationsteilnehmers (20) als auch die Software-Client-Anwendung des wenigstens einen zweiten Kommunikationsteilnehmers (21) ausgebildet ist, mit einer Anwendungs-Server-Entität (120), insbesondere über ein Telekommunikationsnetz (100), zu kommunizieren,
wobei mittels der Software-Client-Anwendungen der Kommunikationsteilnehmer (20, 21) Registrierungsdaten von der Anwendungs-Server-Entität (120) zu den Kommunikationsteilnehmern (20, 21) und/oder von den Kommunikationsteilnehmern (20, 21) zur Anwendungs-Server-Entität (120) gesendet werden, sodass den Kommunikationsteilnehmern (20, 21) wenigstens eine Dienste-Kennungsinformation, entsprechend dem Dienst, vorliegt,
wobei das Verfahren die nachfolgenden Verfahrensschritte aufweist:
-- in einem ersten Schritt wird zum Start einer durch den ersten Kommunikationsteilnehmer (20) initiierten Nachrichten-Session von Broadcast-Nachrichten eine Sessions-Kennungsinformation durch den ersten Kommunikationsteilnehmer (20) generiert
-- in einem dem ersten Schritt nachfolgenden zweiten Schritt sendet der erste Kommunikationsteilnehmer (20) eine, die Dienste-Kennungsinformation und die Sessions-Kennungsinformation enthaltende Anfrage-Broadcast-Nachricht zur Teilnahme des zweiten Kommunikationsteilnehmers (21) an der Nachrichten-Session, wobei der zweite Kommunikationsteilnehmer (21) die Anfrage-Broadcast-Nachricht empfängt und der erste Kommunikationsteilnehmer (20) eine Antwort-Nachricht zur Teilnahme des zweiten Kommunikationsteilnehmers (21) an der Nachrichten-Session empfängt, wobei die Anfrage-Broadcast-Nachricht und/oder die Antwort-Nachricht unter Verwendung von wenigstens einem Teil der Registrierungsdaten gesichert, insbesondere signiert, ist,
-- in einem dem zweiten Schritt nachfolgenden dritten Schritt erfolgt eine Übertragung von Broadcast-Nachrichten zwischen dem ersten und zweiten Kommunikationsteilnehmer (20, 21) zum Übermitteln des Nachrichteninhalts in gesicherter Form,
wobei die im dritten Schritt übertragenen Broadcast-Nachrichten zwischen dem ersten und zweiten Kommunikationsteilnehmer (20, 21) verschlüsselt sind, **dadurch gekennzeichnet**,
wobei entweder
-- zur Verschlüsselung eine Sessions-Schlüsselinformation verwendet wird, wobei die Anwendungs-Server-Entität (120) in einem dem ersten Schritt nachfolgenden vierten Schritt die Sessions-Schlüsselinformation generiert und an den ersten Kommunikationsteilnehmer (20) sendet, oder
-- zur Verschlüsselung eine Zertifikatsinformation des zweiten Kommunikationsteilnehmers (21) verwendet wird, wobei die Registrierungsdaten neben der Dienste-Kennungsinformation Zertifikatsinformationen, umfassend die Zertifikatsinformation des zweiten Kommunikationsteilnehmers, einer Öffentliche-Schlüssel-Infrastruktur und/oder einer Zertifikats-Autorität umfassen, wobei die Registrierungsdaten für jeden Kommunikationsteilnehmer eine zugeordnete Zertifikatsinformation und eine Private-Schlüssel-Information umfassen.

2. Verfahren nach Anspruch 1, **dadurch gekennzeichnet, dass** der erste Kommunikationsteilnehmer (20) die Antwort-Nachricht zur Teilnahme des zweiten Kommunikationsteilnehmers (21) an der Nachrichten-Session als eine von der Anwendungs-Server-Entität (120) gesendete Nachricht empfängt, insbesondere als verschlüsselte und signierte Nachricht.

3. Verfahren nach einem der vorhergehenden Ansprüche, **dadurch gekennzeichnet, dass** die Antwort-Nachricht zur Teilnahme des zweiten Kommunikationsteilnehmers (21) an der Nachrichten-Session eine Transportverschlüsselung nutzende und auf der Basis der Registrierungsdaten verschlüsselte Antwort-Nachricht ist.

4. Verfahren nach einem der vorhergehenden Ansprüche, **dadurch gekennzeichnet, dass** die im dritten Schritt übertragenen Broadcast-Nachrichten zwischen dem ersten und zweiten Kommunikationsteilnehmer (20, 21) nicht nur verschlüsselt sondern auch signiert sind, wobei zur Signierung die Private-Schlüssel-Information verwendet wird.

5. System zum Übermitteln eines Nachrichteninhalts, bezüglich eines Dienstes, in verschlüsselter Form zwischen einem ersten Kommunikationsteilnehmer (20) und wenigstens einem zweiten Kommunikationsteilnehmer (21), wobei die Übermittlung des Nachrichteninhalts mittels Broadcast-Nachrichten einer PC5-Sidelink Funktionalität, insbesondere unter Nutzung der Mode-4-Funktionalität, erfolgt, wobei sowohl der erste Kommunikationsteilnehmer (20) als auch der wenigstens eine zweite Kommunikationsteilnehmer (21) ein Client-Computergerät zur Ausführung von Software-Code einer Software-Client-Anwendung ist, wobei die Software-Client-Anwendung sowohl des ersten Kommunikationsteilnehmers (20) als auch die Software-Client-Anwendung des wenigstens einen zweiten Kommunikationsteilnehmers (21) ausgebildet ist, mit einer Anwendungs-Server-Entität (120) zu kommunizieren,
wobei mittels der Software-Client-Anwendungen der Kommunikationsteilnehmern (20, 21) Registrierungsdaten von der Anwendungs-Server-Entität (120) zu den Kommunikationsteilnehmern (20, 21) und/oder von den Kommunikationsteilnehmern (20, 21) zur Anwendungs-Server-Entität (120) gesendet werden, sodass den Kommunikationsteilnehmern (20, 21) wenigstens eine Dienste-Kennungsinformation, entsprechend dem Dienst, vorliegt,
wobei das System derart konfiguriert ist, dass:
-- zum Start einer durch den ersten Kommunikationsteilnehmer (20) initiierten Nachrichten-Session von Broadcast-Nachrichten wird eine Sessions-Kennungsinformation durch den ersten Kommunikationsteilnehmer (20) generiert
-- der erste Kommunikationsteilnehmer (20) sendet eine, die Dienste-Kennungsinformation und die Sessions-Kennungsinformation enthaltende Anfrage-Broadcast-Nachricht zur Teilnahme des zweiten Kommunikationsteilnehmers (21) an der Nachrichten-Session, wobei der zweite Kommunikationsteilnehmer (21) die Anfrage-Broadcast-Nachricht empfängt und der erste Kommunikationsteilnehmer (20) eine Antwort-Nachricht zur Teilnahme des zweiten Kommunikationsteilnehmers (21) an der Nachrichten-Session, wobei die Anfrage-Broadcast-Nachricht und/oder die Antwort-Nachricht unter Verwendung von wenigstens einem Teil der Registrierungsdaten gesichert, insbesondere signiert, ist,
-- eine Übertragung von Broadcast-Nachrichten zwischen dem ersten und zweiten Kommunikationsteilnehmer (20, 21) zum Übermitteln des Nachrichteninhalts in gesicherter Form erfolgt,
wobei das System derart konfiguriert ist, dass die übertragenen Broadcast-Nachrichten zum Übermitteln des Nachrichteninhalts verschlüsselt sind, **dadurch gekennzeichnet**
wobei entweder
-- zur Verschlüsselung eine Sessions-Schlüsselinformation verwendet wird, wobei die Anwendungs-Server-Entität (120) in einem dem ersten Schritt nachfolgenden vierten Schritt die Sessions-Schlüsselinformation generiert und an den ersten Kommunikationsteilnehmer (20) sendet, oder
-- zur Verschlüsselung eine Zertifikatsinformation des zweiten Kommunikationsteilnehmers (21) verwendet wird, wobei die Registrierungsdaten neben der Dienste-Kennungsinformation Zertifikatsinformationen, umfassend die Zertifikatsinformation des zweiten Kommunikationsteilnehmers, einer Öffentliche-Schlüssel-Infrastruktur und/oder einer Zertifikats-Autorität umfassen, wobei die Registrierungsdaten für jeden Kommunikationsteilnehmer eine zugeordnete Zertifikatsinformation und eine Private-Schlüssel-Information umfassen.

6. System nach Anspruch 5, wobei die Software-Client-Anwendung sowohl des ersten Kommunikationsteilnehmers (20) als auch die Software-Client-Anwendung des wenigstens einen zweiten Kommunikationsteilnehmers (21) ausgebildet ist, mit der Anwendungs-Server-Entität (120) über ein Telekommunikationsnetz (100), zu kommunizieren.

7. Telekommunikationsnetz (100) umfassend das System nach Anspruch 5.

8. Computerprogramm umfassend Befehle, mit deren Hilfe die Schritte eines Verfahrens nach einem der Ansprüche 1 bis 4 durchführbar sind, wenn das Computerprogramm in einem System nach Anspruch 5 oder 6 ausgeführt wird.

9. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 8 speichert oder überträgt oder wobei das computerlesbare Medium oder das Datenträgersignal den auf einer ▪ programmierbaren Einrichtung, insbesondere auf einer programmierbaren Einrichtung der Kommunikationsteilnehmer (20, 21) und/oder eines Netzknotens des Telekommunikationsnetzes (100), auszuführenden Teil des Computerprogramms nach Anspruch 8 speichert oder überträgt.

## Claims

1. Method for transmitting a message content relating to a service in encrypted form between a first communication subscriber (20) and at least one second communication subscriber (21), wherein the message content is transmitted by means of broadcast messages of a PC5-Sidelink functionality, in particular using the Mode-4 functionality,
wherein both the first communication subscriber (20) and the at least one second communication subscriber (21) is a client computer device for executing software code of a software client application, wherein the software client application of the first communication subscriber (20) and the software client application of the at least one second communication subscriber (21) are both designed to communicate with an application server entity (120), in particular via a telecommunications network (100),
wherein by means of the software client applications of the communication subscribers (20, 21) registration data are sent from the application server entity (120) to the communication subscribers (20, 21) and/or from the communication subscribers (20, 21) to the application server entity (120) and so the communication subscribers (20, 21) have at least one item of services identifier information corresponding to the service,
wherein the method includes the following method steps:
- in a first step, at the start of a message session of broadcast messages initiated by the first communication subscriber (20), session identifier information is generated by the first communication subscriber (20),
- in a second step following the first step, the first communication subscriber (20) sends an enquiry broadcast message, which contains the services identifier information and the session identifier information, in respect of the participation of the second communication subscriber (21) in the message session, wherein the second communication subscriber (21) receives the enquiry broadcast message and the first communication subscriber (20) receives a response message in respect of the participation of the second communication subscriber (21) in the message session, wherein the enquiry broadcast message and/or the response message is secured, in particular signed, using at least one part of the registration data,
- in a third step following the second step, broadcast messages are transferred between the first and second communication subscriber (20, 21) in order to transmit the message content in secure form,
wherein the broadcast messages between the first and second communication subscriber (20, 21) which are transferred in the third step are encrypted, **characterised in that**,
wherein either
- for encryption purposes, session key information is used, wherein the application server entity (120) generates, in a fourth step following the first step, the session key information and sends it to the first communication subscriber (20) or
- for encryption purposes, certification information of the second communication subscriber (21) is used, wherein the registration data comprise, in addition to the services identifier information, certificate information comprising the certificate information of the second communication subscriber of a public key infrastructure and/or a certificate authority, wherein the registration data for each communication subscriber comprise allocated certificate information and private key information.

2. Method as claimed in claim 1, **characterised in that** the first communication subscriber (20) receives the response message in respect of the participation of the second communication subscriber (21) in the message session as a message sent by the application server entity (120), in particular as an encrypted and signed message.

3. Method as claimed in any one of the preceding claims, **characterised in that** the response message in respect of the participation of the second communication subscriber (21) in the message session is a response message which uses transport encryption and is encrypted on the basis of the registration data.

4. Method as claimed in any one of the preceding claims, **characterised in that** the broadcast messages between the first and second communication subscriber (20, 21) transferred in the first step are not only encrypted but are also signed, wherein the private key information is used for signing purposes.

5. System for transmitting a message content relating to a service in encrypted form between a first communication subscriber (20) and at least one second communication subscriber (21), wherein the message content is transmitted by means of broadcast messages of a PC5-Sidelink functionality, in particular using the Mode-4 functionality, wherein both the first communication subscriber (20) and the at least one second communication subscriber (21) is a client computer device for executing software code of a software client application, wherein the software client application of the first communication subscriber (20) and the software client application of the at least one second communication subscriber (21) are both designed to communicate with an application server entity (120),
wherein by means of the software client applications of the communication subscribers (20, 21) registration data are sent from the application server entity (120) to the communication subscribers (20, 21) and/or from the communication subscribers (20, 21) to the application server entity (120) and so the communication subscribers (20, 21) have at least one item of services identifier information corresponding to the service,
wherein the system is configured such that:
- at the start of a message session of broadcast messages initiated by the first communication subscriber (20), session identifier information is generated by the first communication subscriber (20),
- the first communication subscriber (20) sends an enquiry broadcast message, which contains the services identifier information and the session identifier information, in respect of the participation of the second communication subscriber (21) in the message session, wherein the second communication subscriber (21) receives the enquiry broadcast message and the first communication subscriber (20) receives a response message in respect of the participation of the second communication subscriber (21) in the message session, wherein the enquiry broadcast message and/or the response message is secured, in particular signed, using at least one part of the registration data,
- broadcast messages are transferred between the first and second communication subscriber (20, 21) in order to transmit the message content in secure form,
wherein the system is configured such that the transferred broadcast messages are encrypted in order to transmit the message content, **characterised in that**,
wherein either
- for encryption purposes, session key information is used, wherein the application server entity (120) generates, in a fourth step following the first step, the session key information and sends it to the first communication subscriber (20) or
- for encryption purposes, certification information of the second communication subscriber (21) is used, wherein the registration data comprise, in addition to the services identifier information, certificate information comprising the certificate information of the second communication subscriber of a public key infrastructure and/or a certificate authority, wherein the registration data for each communication subscriber comprise allocated certificate information and private key information.

6. System as claimed in claim 5, wherein the software client application of the first communication subscriber (20) and the software client application of the at least one second communication subscriber (21) are both designed to communicate with the application server entity (120), in particular via a telecommunications network (100).

7. Telecommunications network (100) comprising the system as clamed in claim 5.

8. Computer program comprising instructions, with the aid of which the steps of a method as claimed in any one of claims 1 to 4 can be performed, when the computer program is executed in a system as claimed in claim 5 or 6.

9. Computer-readable medium, provided for storing a computer program, or data carrier signal, provided for transferring a computer program, wherein the computer-readable medium or the data carrier signal stores or transfers the computer program as claimed in claim 8, or wherein the computer-readable medium or the data carrier signal stores or transfers the part of the computer program as claimed in claim 8 which is to be executed on a programmable device, in particular on a programmable device of the communication subscribers (20, 21) and/or a network node of the telecommunications network (100).

## Revendications

1. Procédé pour transmettre, sous forme chiffrée, un contenu de message, concernant un service, entre un premier abonné de communication (20) et au moins un second abonné de communication (21), dans lequel la transmission du contenu de message s'effectue au moyen de messages de diffusion d'une fonctionnalité PC5-Sidelink, en particulier en utilisant la fonctionnalité Mode-4, dans lequel le premier abonné de communication (20) et le au moins un second abonné de communication (21) sont tous deux un dispositif informatique client pour exécuter un code de logiciel d'une application cliente logicielle, dans lequel l'application cliente logicielle du premier abonné de communication (20) et l'application cliente logicielle du au moins un second abonné de communication (21) sont toutes deux conçues pour communiquer avec une entité de serveur d'applications (120), en particulier via un réseau de télécommunications (100),
dans lequel des données d'enregistrement sont envoyées de l'entité de serveur d'applications (120) aux abonnés de communication (20, 21) et/ou des abonnés de communication (20, 21) à l'entité de serveur d'applications (120) au moyen des applications clientes logicielles, de sorte qu'au moins une information d'identification de service, correspondant au service, est présente pour les abonnés de communication (20, 21), dans lequel le procédé comporte les étapes de procédé suivantes :
- dans une première étape, pour lancer une session de messagerie de messages de diffusion initiée par le premier abonné de communication (20), une information d'identification de session est générée par le premier abonné de communication (20),
- dans une deuxième étape qui suit la première étape, le premier abonné de communication (20) envoie un message de diffusion de demande contenant l'information d'identification de service et l'information d'identification de session en vue de la participation du second abonné de communication (21) à la session de messagerie, dans lequel le second abonné de communication (21) reçoit le message de diffusion de demande et le premier abonné de communication (20) reçoit un message de réponse à la participation du second abonné de communication (21) à la session de messagerie, dans lequel le message de diffusion de demande et/ou le message de réponse est sécurisé, en particulier signé, en utilisant au moins une partie des données d'enregistrement,
- dans une troisième étape qui suit la deuxième étape, une transmission de messages de diffusion s'effectue entre les premier et second abonnés de communication (20, 21) pour transmettre le contenu de message sous forme sécurisée,
dans lequel les messages de diffusion transmis dans la troisième étape entre les premier et second abonnés de communication (20, 21) sont chiffrés, **caractérisé en ce que**
- soit une information de clé de session est utilisée pour le chiffrement, l'entité de serveur d'applications (120) générant l'information de clé de session dans une quatrième étape qui suit la première étape et l'envoyant au premier abonné de communication (20),
- soit une information de certificat du second abonné de communication (21) est utilisée pour le chiffrement, les données d'enregistrement comprenant, en plus de l'information d'identification de service comprenant l'information de certificat du second abonné de communication, une infrastructure à clé publique et/ou une autorité de certification, les données d'enregistrement pour chaque abonné de communication comprenant une information de certificat associée et une information de clé privée.

2. Procédé selon la revendication 1, **caractérisé en ce que** le premier abonné de communication (20) reçoit le message de réponse à la participation du second abonné de communication (21) à la session de messagerie sous la forme d'un message envoyé par l'entité de serveur d'applications (120), en particulier sous la forme d'un message chiffré et signé.

3. Procédé selon l'une des revendications précédentes, **caractérisé en ce que** le message de réponse à la participation du second abonné de communication (21) à la session de messagerie est un message de réponse utilisant un chiffrement de transport et chiffré sur la base des données d'enregistrement.

4. Procédé selon l'une des revendications précédentes, **caractérisé en ce que** :
les messages de diffusion transmis dans la troisième étape entre les premier et second abonnés de communication (20, 21) sont non seulement chiffrés mais aussi signés, dans lequel l'information de clé privée est utilisée pour la signature.

5. Système pour transmettre, sous forme chiffrée, un contenu de message, concernant un service, entre un premier abonné de communication (20) et au moins un second abonné de communication (21), dans lequel la transmission du contenu de message s'effectue au moyen de messages de diffusion d'une fonctionnalité PC5-Sidelink, en particulier en utilisant la fonctionnalité Mode-4, dans lequel le premier abonné de communication (20) et le au moins un second abonné de communication (21) sont tous deux un dispositif informatique client pour exécuter un code de logiciel d'une application cliente logicielle, dans lequel l'application cliente logicielle du premier abonné de communication (20) et l'application cliente logicielle du au moins un second abonné de communication (21) sont toutes deux conçues pour communiquer avec une entité de serveur d'applications (120),
dans lequel des données d'enregistrement sont envoyées de l'entité de serveur d'applications (120) aux abonnés de communication (20, 21) et/ou des abonnés de communication (20, 21) à l'entité de serveur d'applications (120) au moyen des applications clientes logicielles, de sorte qu'au moins une information d'identification de service correspondant au service est présente pour les abonnés de communication (20, 21),
dans lequel le système est configuré de telle sorte que :
- pour lancer une session de messagerie de messages de diffusion initiée par le premier abonné de communication (20), une information d'identification de session est générée par le premier abonné de communication (20),
- le premier abonné de communication (20) envoie un message de diffusion de demande contenant l'information d'identification de service et l'information d'identification de session en vue de la participation du second abonné de communication (21) à la session de messagerie, dans lequel le second abonné de communication (21) reçoit le message de diffusion de demande et le premier abonné de communication (20) reçoit un message de réponse à la participation du second abonné de communication (21) à la session de messagerie, dans lequel le message de diffusion de demande et/ou le message de réponse est sécurisé, en particulier signé, en utilisant au moins une partie des données d'enregistrement,
- une transmission de messages de diffusion s'effectue entre les premier et second abonnés de communication (20, 21) pour transmettre le contenu de message sous forme sécurisée,
dans lequel le système est configuré de telle sorte que les messages de diffusion transmis sont chiffrés pour transmettre le contenu de message, **caractérisé en ce que**
- soit une information de clé de session est utilisée pour le chiffrement, l'entité de serveur d'applications (120) générant l'information de clé de session dans une quatrième étape qui suit la première étape et l'envoyant au premier abonné de communication (20),
- soit une information de certificat du second abonné de communication (21) est utilisée pour le chiffrement, les données d'enregistrement comprenant, en plus de l'information d'identification de service comprenant l'information de certificat du second abonné de communication, une infrastructure à clé publique et/ou une autorité de certification, les données d'enregistrement pour chaque abonné de communication comprenant une information de certificat associée et une information de clé privée.

6. Système selon la revendication 5, dans lequel l'application cliente logicielle du premier abonné de communication (20) et l'application cliente logicielle du au moins un second abonné de communication (21) sont toutes deux conçues pour communiquer avec l'entité de serveur d'applications (120) via un réseau de télécommunications (100).

7. Réseau de télécommunication (100) comprenant le système selon la revendication 5.

8. Programme informatique comprenant des instructions au moyen desquelles les étapes d'un procédé selon l'une des revendications 1 à 4 peuvent être réalisés lorsque le programme informatique est exécuté dans un système selon la revendication 5 ou 6.

9. Support lisible par ordinateur, destiné à stocker un programme informatique, ou signal porteur de données, destiné à transmettre un programme informatique, dans lequel le support lisible par ordinateur ou le signal porteur de données stocke ou transmet le programme informatique selon la revendication 8, ou dans lequel le support lisible par ordinateur ou le signal porteur données mémorise ou transmet la partie du programme informatique selon la revendication 8 à exécuter sur un dispositif programmable, en particulier sur un dispositif programmable des abonnés de communication (20, 21) et/ou un nœud de réseau du réseau de télécommunication (100).
